(19) Europäisches Patentamt
European Patent Office
Office européen des brevets

(11) EP 3 786 213 A1

(12) **EUROPEAN PATENT APPLICATION**
published in accordance with Art. 153(4) EPC

(43) Date of publication:
**03.03.2021 Bulletin 2021/09**

(21) Application number: **19794042.2**

(22) Date of filing: **23.04.2019**

(51) Int Cl.:
***C08G 73/10** (2006.01)* ***C08G 77/34** (2006.01)*

(86) International application number:
**PCT/JP2019/017294**

(87) International publication number:
**WO 2019/208590 (31.10.2019 Gazette 2019/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.04.2018 JP 2018082581**

(71) Applicant: **Shin-Etsu Chemical Co., Ltd.**
**Tokyo 100-0004 (JP)**

(72) Inventors:
- **ANDO, Yuji**
  **Annaka-shi, Gunma 379-0224 (JP)**
- **HASHIMOTO, Ryota**
  **Annaka-shi, Gunma 379-0224 (JP)**
- **KASHIWADA, Takeshi**
  **Tokyo 100-0006 (JP)**
- **OKUDA, Toshiaki**
  **Tokyo 100-0006 (JP)**
- **SHINOHARA, Naoyuki**
  **Tokyo 100-0006 (JP)**

(74) Representative: **Beckmann, Claus**
**Kraus & Weisert**
**Patentanwälte PartGmbB**
**Thomas-Wimmer-Ring 15**
**80539 München (DE)**

# (54) SILICON-CONTAINING COMPOUND

(57) Disclosed is a composition comprising a silicon-containing compound represented by the general formula (1) mentioned in the description of the present application, at least one compound of the general formula (2-1) or (2-2) in which m is an integer of 3 or greater mentioned in the description of the present application, and optionally a compound represented by the general formula (3). The total amount of the silicon-containing compound of the general formula (2-1) or (2-2) in which m is an integer of 3 or greater is more than 0 ppm and 46,000 ppm or less based on the total weight of the silicon-containing compounds of the general formulas (1), (2-1), (2-2), and (3). The composition is used for producing a polyimide precursor obtained by copolymerizing a silicon-containing compound, tetracarboxylic dianhydride, and diamine.

FIG. 1

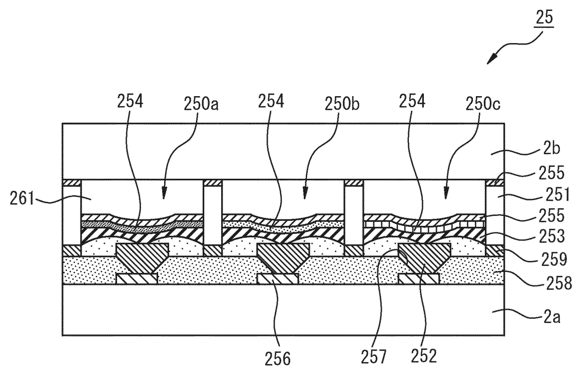


EP 3 786 213 A1

## Description

FIELD

The present invention relates to a composition including a silicon-containing compound, and a method for purifying a silicon-containing compound.

BACKGROUND

A silicon-containing compound (also referred to as siloxane-containing compound, siloxane compound, or polyorganosiloxane) is easy to handle and has excellent electrical properties, weatherability, etc., and are therefore applied to various applications in various fields, for example, the silicon-containing compound is used as an adhesive in the electrical/electronic field or a sealing material for building materials. The silicon-containing compound is used for fixing components and ensuring insulation, particularly in the electrical/electronic field. However, due to the silicone used for these, "silicone troubles" which hinder the conductivity in components having contacts have become a problem. It is estimated that silicone troubles are caused by insulating substances such as silica produced by volatilization of a low molecular weight cyclic siloxane contained in a non-curable or curable silicone composition, leading to adhesion to contacts, thus causing spark-ignition combustion.

[CITATION LIST]

[PATENT LITERATURE]

[PTL 1] WO 2014/148441
[PTL 2] WO 2014/098235
[PTL 3] JP 2016-029126 A
[PTL 4] JP 2006-028533 A
[PTL 5] JP 2002-012666 A
[PTL 6] JP 2007-512568 W
[PTL 7] JP 2012-511173 W
[PTL 8] JP 2010-067957 A
[PTL 9] JP 2013-179306 A
[PTL 10] WO 2005/068535

[NON-PATENT LITERATURE]

[NPL 1] Website of Shin-Etsu Chemical Co., Ltd., "Q&A", "Regarding Silicone Grease and Oil Compounds", [online], [retrieved on March 13, 2018], Internet <URL:https://www.silicone.jp/contact/qa/qa103.shtml>

SUMMARY

[TECHNICAL PROBLEM]

In PTLs 1 and 2, a siloxane-containing compound is used as a monomer of a polyimide precursor. Such a siloxane-containing compound contains a low molecular weight cyclic siloxane (hereinafter also referred to as low-molecular cyclic siloxane). As mentioned above, this low molecular weight cyclic siloxane may cause a contact fault in a production apparatus of the process. Please see, for example, NPL 1.

PTLs 3 to 5 mention polyimide precursors in which this low molecular weight cyclic siloxane is reduced by purification. PTL 3 mentions that a low molecular weight cyclic siloxane is removed by adding a siloxane-containing compound to acetone, followed by centrifugation and further decantation, and mentions that the polyimide thus obtained has transparency and causes little outgas generation. PTLs 4 and 5 mention that a siloxane-containing compound is purified by stripping the siloxane-containing compound under specific conditions or by dissolving the siloxane-containing compound in 2-butanone and reprecipitating with methanol, and mention that the adhesiveness of the polyimide thus obtained is improved.

The present inventors synthesized a polyimide precursor using a siloxane-containing compound purified by the same purification method as mentioned in PTLs 3 to 5, and produced a polyimide using the polyimide precursor. As

a result, they have found that, when a large amount of the polyimide precursor is treated in the polyimide production process, the evaluation of the count number of foreign material adhered to the polyimide film is inferior, and when using the purified product, the degree of an improvement in yellow index (YI value) is insufficient as compared with the unpurified product. Therefore, it is an object of the present invention to provide a composition including a silicon-containing compound, which enables further improvement in yellow index (YI value) of the thus obtained polyimide as compared with the case of using a conventional composition including a silicon-containing compound, and can produce a polyimide precursor composition capable of reducing foreign material generated in the polyimide production process.

[SOLUTION TO PROBLEM]

As a result of intensive studies, the present inventors have noticed that the low-molecular cyclic siloxanes reduced in PTLs 3 to 5 are not phenyl side chains (general formula (2-1) or (2-2) mentioned later) but methyl side chains (general formula (3) mentioned later) and found that aforementioned problems can be solved by purifying the silicon-containing compound and using the silicon-containing compound in which the phenyl side chain of the low molecular weight cyclic siloxane is reduced to a specific amount in the production of the polyimide precursor. The embodiments of the present invention are listed in the following items [1] to [24].

[1] A composition comprising a silicon-containing compound represented by the following general formula (1):

[Chemical Formula 1]

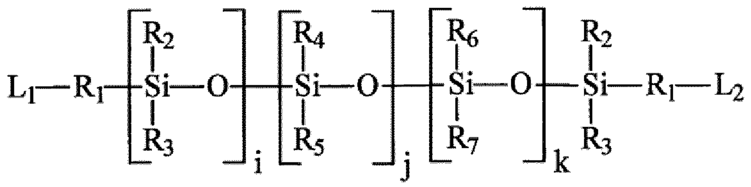

(1)

wherein a plurality of $R_1$ are each independently a single bond or a divalent organic group having 1 to 10 carbon atoms, $R_2$ and $R_3$ are each independently a monovalent organic group having 1 to 10 carbon atoms, at least one of which is a monovalent aliphatic hydrocarbon group having 1 to 5 carbon atoms, $R_4$ and $R_5$ are each independently a monovalent organic group having 1 to 10 carbon atoms, at least one of which is a monovalent aromatic group having 6 to 10 carbon atoms, $R_6$ and $R_7$ are each independently a monovalent organic group having 1 to 10 carbon atoms, at least one of which is an organic group having an unsaturated aliphatic hydrocarbon group, $L_1$ and $L_2$ are each independently an amino group, an anhydride group, an isocyanate group, a carboxyl group, an acid ester group, an acid halide group, a hydroxy group, an epoxy group, or a mercapto group, i and j are each independently an integer of 1 to 200, k is an integer of 0 to 200, and $0.05 \leq j/(i + j + k) \leq 0.50$;

at least one silicon-containing compound of the following general formula (2-1) or (2-2) in which m is an integer of 3 or greater:

[Chemical Formula 2]

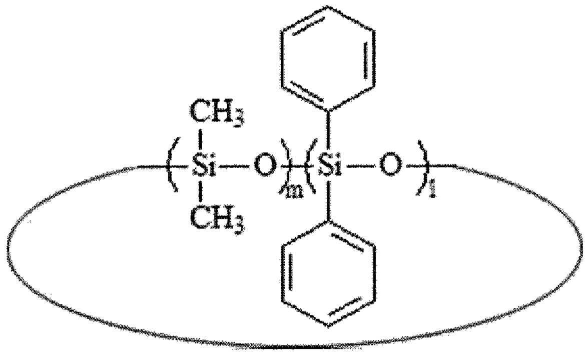

(2-1)

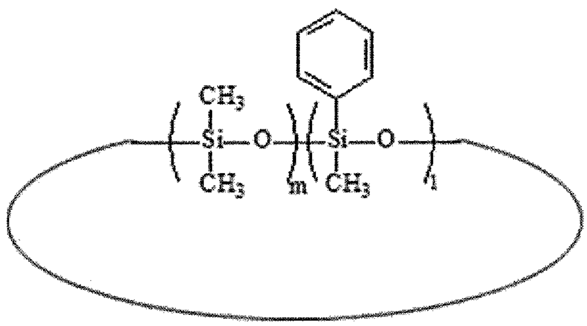

(2-2)

wherein m is an integer of 1 or greater; and
optionally, a silicon-containing compound represented by the following general formula (3):

[Chemical Formula 3]

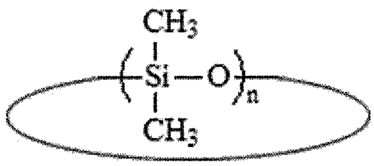

(3)

wherein n is an integer of 2 or greater; wherein
the total amount of the silicon-containing compound of the general formula (2-1) or (2-2) in which m is an integer of 3 or greater is more than 0 ppm and 46,000 ppm or less based on the total weight of the silicon-containing compounds of the general formulas (1), (2-1), (2-2), and (3), and
the composition is used for producing a polyimide precursor obtained by copolymerizing the silicon-containing compound, tetracarboxylic dianhydride, and diamine.

[2] The composition according to item 1, wherein the total amount of the silicon-containing compound of the general formula (2-1) or (2-2) in which m is an integer of 3 or greater is more than 0 ppm and 10,000 ppm or less based on the total weight of the silicon-containing compounds of the general formulas (1), (2-1), (2-2), and (3).
[3] The composition according to item 2, wherein the total amount of the silicon-containing compound of the general formula (2-1) or (2-2) in which m is an integer of 3 or greater is more than 0 ppm and 6,000 ppm or less based on the total weight of the silicon-containing compounds of the general formulas (1), (2-1), (2-2), and (3).
[4] The composition according to any one of items 1 to 3, wherein m is an integer of 3 to 5 in the silicon-containing compound represented by the general formula (2-1) or (2-2).
[5] A composition comprising a silicon-containing compound represented by the following general formula (1):

[Chemical Formula 4]

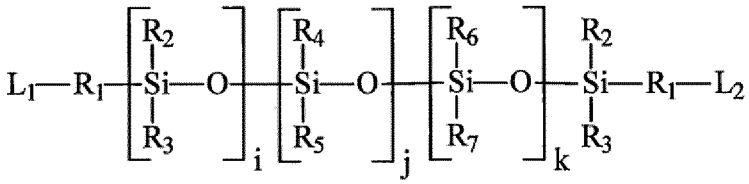

(1)

wherein a plurality of $R_1$ are each independently a single bond or a divalent organic group having 1 to 10 carbon atoms, $R_2$ and $R_3$ are each independently a monovalent organic group having 1 to 10 carbon atoms, at least one of which is a monovalent aliphatic hydrocarbon group having 1 to 5 carbon atoms, $R_4$ and $R_5$ are each independently a monovalent organic group having 1 to 10 carbon atoms, at least one of which is a monovalent aromatic group having 6 to 10 carbon atoms, $R_6$ and $R_7$ are each independently a monovalent organic group having 1 to 10 carbon atoms, at least one of which is an organic group having an unsaturated aliphatic hydrocarbon group, $L_1$ and $L_2$ are each independently an amino group, an anhydride group, an isocyanate group, a carboxyl group, an acid ester group, an acid halide group, a hydroxy group, an epoxy group, or a mercapto group, i and j are each independently an integer of 1 to 200, k is an integer of 0 to 200, and $0.05 \leq j/(i + j + k) \leq 0.50$;

at least one silicon-containing compound of the following general formula (2-1) or (2-2) in which m is 3:

[Chemical Formula 5]

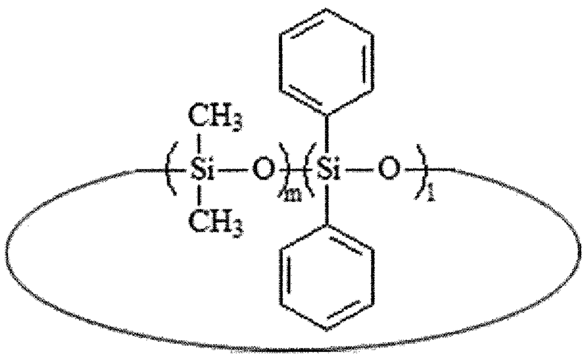

(2－1)

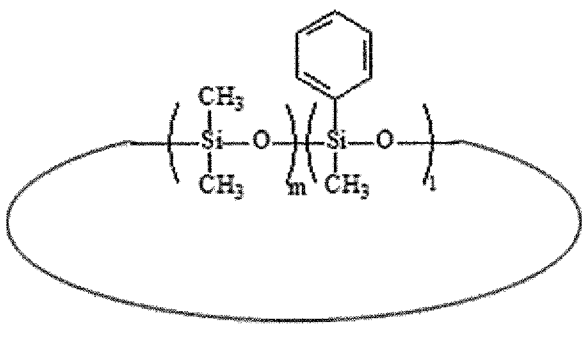

(2－2)

wherein m is an integer of 1 or greater; and
optionally, a silicon-containing compound represented by the following general formula (3):

[Chemical Formula 6]

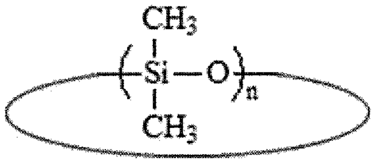

(3)

wherein n is an integer of 2 or greater; wherein

the total amount of the silicon-containing compound of the general formula (2-1) or (2-2) in which m is 3 is more than 0 ppm and 25,000 ppm or less based on the total weight of the silicon-containing compounds of the general formulas (1), (2-1), (2-2), and (3), and

the composition is used for producing a polyimide precursor obtained by copolymerizing the silicon-containing compound, tetracarboxylic dianhydride, and diamine.

[6] The composition according to item 5, wherein the total amount of the silicon-containing compound of the general formula (2-1) or (2-2) in which m is 3 is more than 0 ppm and 6,600 ppm or less based on the total weight of the silicon-containing compounds of the general formulas (1), (2-1), (2-2), and (3).

[7] The composition according to item 6, wherein the total amount of the silicon-containing compound of the general formula (2-1) or (2-2) in which m is 3 is more than 0 ppm and 3,700 ppm or less based on the total weight of the silicon-containing compounds of the general formulas (1), (2-1), (2-2), and (3).

[8] A composition comprising a silicon-containing compound represented by the following general formula (1):

[Chemical Formula 7]

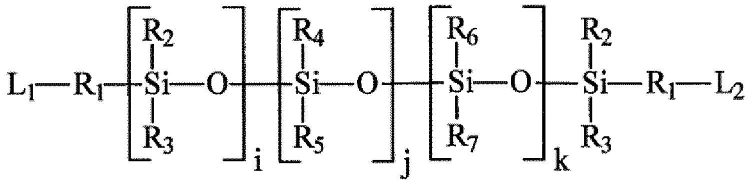

(1)

wherein a plurality of $R_1$ are each independently a single bond or a divalent organic group having 1 to 10 carbon atoms, $R_2$ and $R_3$ are each independently a monovalent organic group having 1 to 10 carbon atoms, at least one of which is a monovalent aliphatic hydrocarbon group having 1 to 5 carbon atoms, $R_4$ and $R_5$ are each independently a monovalent organic group having 1 to 10 carbon atoms, at least one of which is a monovalent aromatic group having 6 to 10 carbon atoms, $R_6$ and $R_7$ are each independently a monovalent organic group having 1 to 10 carbon atoms, at least one of which is an organic group having an unsaturated aliphatic hydrocarbon group, $L_1$ and $L_2$ are each independently an amino group, an anhydride group, an isocyanate group, a carboxyl group, an acid ester group, an acid halide group, a hydroxy group, an epoxy group, or a mercapto group, i and j are each independently an integer of 1 to 200, k is an integer of 0 to 200, and $0.05 \leq j/(i + j + k) \leq 0.50$;

at least one silicon-containing compound of the following general formula (2-1) or (2-2) in which m is 4:

[Chemical Formula 8]

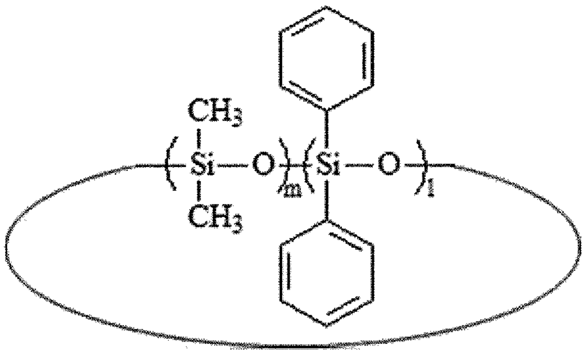

(2-1)

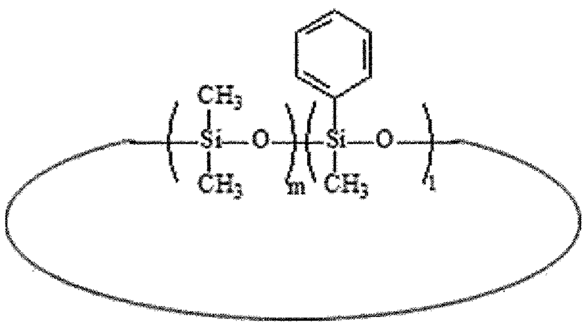

(2-2)

wherein m is an integer of 1 or greater; and
optionally, a silicon-containing compound represented by the following general formula (3):

[Chemical Formula 9]

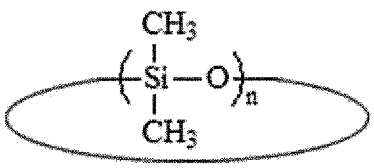

(3)

wherein n is an integer of 2 or greater; wherein
the total amount of the silicon-containing compound of the general formula (2-1) or (2-2) in which m is 4 is more than 0 ppm and 15,000 ppm or less based on the total weight of the silicon-containing compounds of the general formulas (1), (2-1), (2-2), and (3); and
the composition is used for producing a polyimide precursor obtained by copolymerizing the silicon-containing compound, tetracarboxylic dianhydride, and diamine.

[9] The composition according to item 8, wherein the total amount of the silicon-containing compound of the general formula (2-1) or (2-2) in which m is 4 is more than 0 ppm and 2,500 ppm or less based on the total weight of the silicon-containing compounds of the general formulas (1), (2-1), (2-2), and (3).
[10] The composition according to item 9, wherein the total amount of the silicon-containing compound of the general formula (2-1) or (2-2) in which m is 4 is more than 0 ppm and 1,400 ppm or less based on the total weight of the silicon-containing compounds of the general formulas (1), (2-1), (2-2), and (3).
[11] A composition comprising a silicon-containing compound represented by the following general formula (1):

[Chemical Formula 10]

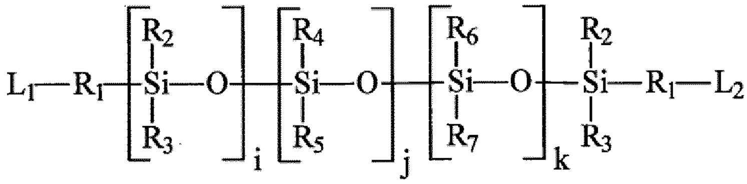

(1)

wherein a plurality of $R_1$ are each independently a single bond or a divalent organic group having 1 to 10 carbon atoms, $R_2$ and $R_3$ are each independently a monovalent organic group having 1 to 10 carbon atoms, at least one of which is a monovalent aliphatic hydrocarbon group having 1 to 5 carbon atoms, $R_4$ and $R_5$ are each independently a monovalent organic group having 1 to 10 carbon atoms, at least one of which is a monovalent aromatic group having 6 to 10 carbon atoms, $R_6$ and $R_7$ are each independently a monovalent organic group having 1 to 10 carbon atoms, at least one of which is an organic group having an unsaturated aliphatic hydrocarbon group, $L_1$ and $L_2$ are each independently an amino group, an anhydride group, an isocyanate group, a carboxyl group, an acid ester group, an acid halide group, a hydroxy group, an epoxy group, or a mercapto group, i and j are each independently an integer of 1 to 200, k is an integer of 0 to 200, and $0.05 \leq j/(i + j + k) \leq 0.50$;

at least one silicon-containing compound of the following general formula (2-1) or (2-2) in which m is an integer of 3 or greater:

[Chemical Formula 11]

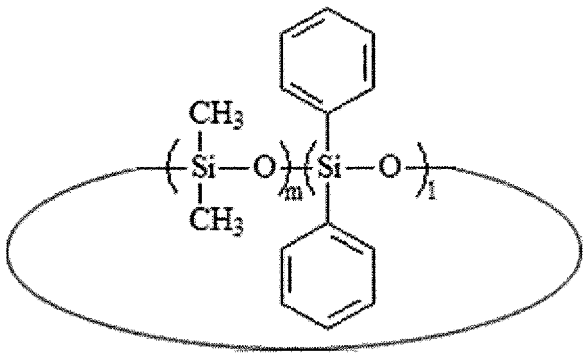

(2－1)

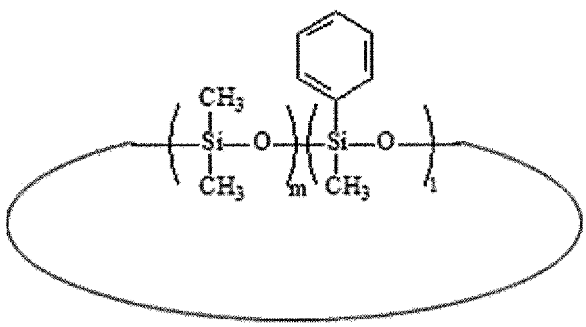

(2－2)

wherein m is an integer of 1 or greater; and
a silicon-containing compound represented by the following general formula (3):

[Chemical Formula 12]

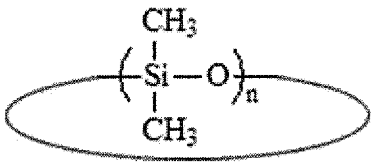

(3)

wherein n is an integer of 2 or greater; wherein
the total amount of the silicon-containing compound of the general formula (2-1) or (2-2) in which m is an integer of 3 or greater and the silicon-containing compound of the general formula (3) in which n is an integer of 3 or greater is more than 0 ppm and 47,000 ppm or less based on the total weight of the silicon-containing compounds of the general formulas (1), (2-1), (2-2), and (3), and
the composition is used for producing a polyimide precursor obtained by copolymerizing the silicon-containing compound, tetracarboxylic dianhydride, and diamine.

[12] The composition according to item 11, wherein the total amount of the silicon-containing compound of the general formula (2-1) or (2-2) in which m is an integer of 3 or greater and the silicon-containing compound of the general formula (3) in which n is an integer of 3 or greater is more than 0 ppm and 11,000 ppm or less based on the total weight of the silicon-containing compounds of the general formulas (1), (2-1), (2-2), and (3).
[13] The composition according to item 11 or 12, wherein m is an integer of 3 to 5 in the silicon-containing compound represented by the general formula (2-1) or (2-2).
[14] The composition according to any one of item 11 to 13, wherein n is an integer of 3 to 8 in the silicon-containing compound represented by the general formula (3).
[15] The composition according to any one of items 1 to 14, wherein $L_1$ and $L_2$ of the silicon-containing compound represented by the general formula (1) are each independently an amino group or an anhydride group.
[16] The composition according to item 15, wherein $L_1$ and $L_2$ of the silicon-containing compound represented by the general formula (1) are an amino group.
[17] The composition according to any one of items 1 to 16, wherein the tetracarboxylic dianhydride is at least one selected from the group consisting of pyromellitic dianhydride, 3,3',4,4'-biphenyltetracarboxylic dianhydride, 4,4'-oxydiphthalic anhydride, cyclohexanetetracarboxylic dianhydride, and cyclobutanetetracarboxylic dianhydride.
[18] The composition according to any one of items 1 to 17, wherein the diamine is at least one selected from the group consisting of 4,4'(3,3')-diaminodiphenyl sulfone, m-tolidine, p-phenylenediamine, 2,2'-bis(trifluoromethyl)benzidine, and 2,2'-bis[4-(4-aminophenoxy)phenyl]propane.
[19] The composition according to any one of items 1 to 18, wherein a polyimide resin film obtained by curing the polyimide precursor is used for a flexible substrate.
[20] The composition according to any one of items 1 to 19, wherein a polyimide resin film obtained by curing the polyimide precursor is used for a flexible display.
[21] The silicon-containing compound composition according to any one of items 1 to 20, wherein the silicon-containing compound represented by the general formula (2-1) or (2-2) is a silicon-containing compound represented by the general formula (2-1).
[22] A method for purifying a silicon-containing compound used for producing a polyimide precursor obtained by copolymerizing a silicon-containing compound, tetracarboxylic dianhydride, and diamine, the method comprising the steps of:
providing a composition comprising:

a silicon-containing compound represented by the following general formula (1):

[Chemical Formula 13]

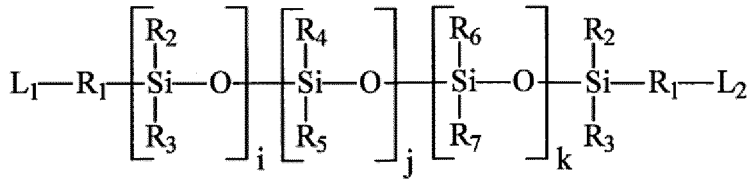

(1)

wherein a plurality of $R_1$ are each independently a single bond or a divalent organic group having 1 to 10 carbon atoms, $R_2$ and $R_3$ are each independently a monovalent organic group having 1 to 10 carbon atoms, at least one of which is a monovalent aliphatic hydrocarbon group having 1 to 5 carbon atoms, $R_4$ and $R_5$ are each independently a monovalent organic group having 1 to 10 carbon atoms, at least one of which is a monovalent aromatic group having 6 to 10 carbon atoms, $R_6$ and $R_7$ are each independently a monovalent organic group having 1 to 10 carbon atoms, at least one of which is an organic group having an unsaturated aliphatic hydrocarbon group, $L_1$ and $L_2$ are each independently an amino group, an anhydride group, an isocyanate group, a carboxyl group, an acid ester group, an acid halide group, a hydroxy group, an epoxy group, or a mercapto group, i and j are each independently an integer of 1 to 200, k is an integer of 0 to 200, and $0.05 \leq j/(i + j + k) \leq 0.50$, at least one silicon-containing compound of the following general formula (2-1) or (2-2) in which m is an integer of 3 or greater:

[Chemical Formula 14]

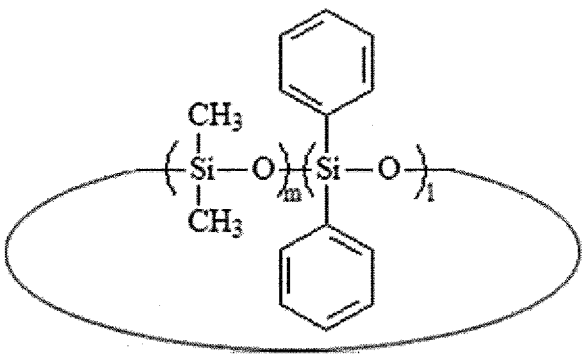

(2-1)

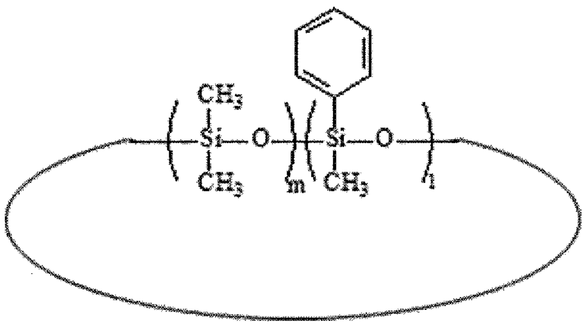

(2-2)

wherein m is an integer of 1 or greater, and
optionally, a silicon-containing compound represented by the following general formula (3):

[Chemical Formula 15]

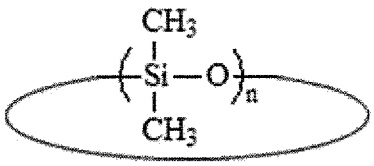

(3)

wherein n is an integer of 2 or greater; and

reducing the total amount of the silicon-containing compound of the general formula (2-1) or (2-2) in which m is an integer of 3 or greater to more than 0 ppm and 46,000 ppm or less based on the total weight of the silicon-containing compounds of the general formulas (1), (2-1), (2-2), and (3).

[23] The method for purifying a silicon-containing compound according to item 22, wherein the silicon-containing compound represented by the general formula (2-1) or (2-2) is a silicon-containing compound represented by the general formula (2-1).

[24] A method for purifying a silicon-containing compound used for producing a polyimide precursor obtained by copolymerizing a silicon-containing compound, tetracarboxylic dianhydride, and diamine, the method comprising the steps of:

providing a composition comprising:

a silicon-containing compound represented by the following general formula (1):

[Chemical Formula 16]

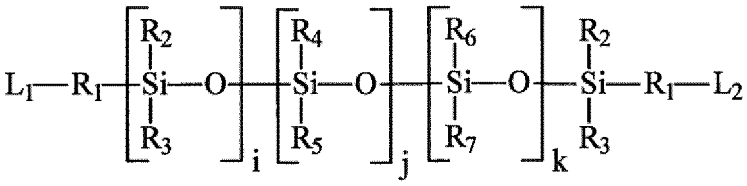

(1)

wherein a plurality of $R_1$ are each independently a single bond or a divalent organic group having 1 to 10 carbon atoms, $R_2$ and $R_3$ are each independently a monovalent organic group having 1 to 10 carbon atoms, at least one of which is a monovalent aliphatic hydrocarbon group having 1 to 5 carbon atoms, $R_4$ and $R_5$ are each independently a monovalent organic group having 1 to 10 carbon atoms, at least one of which is a monovalent aromatic group having 6 to 10 carbon atoms, $R_6$ and $R_7$ are each independently a monovalent organic group having 1 to 10 carbon atoms, at least one of which is an organic group having an unsaturated aliphatic hydrocarbon group, $L_1$ and $L_2$ are each independently an amino group, an anhydride group, an isocyanate group, a carboxyl group, an acid ester group, an acid halide group, a hydroxy group, an epoxy group, or a mercapto group, i and j are each independently an integer of 1 to 200, k is an integer of 0 to 200, and $0.05 \leq j/(i + j + k) \leq 0.50$,

at least one silicon-containing compound of the following general formula (2-1) or (2-2) in which m is an integer of 3 or greater:

[Chemical Formula 17]

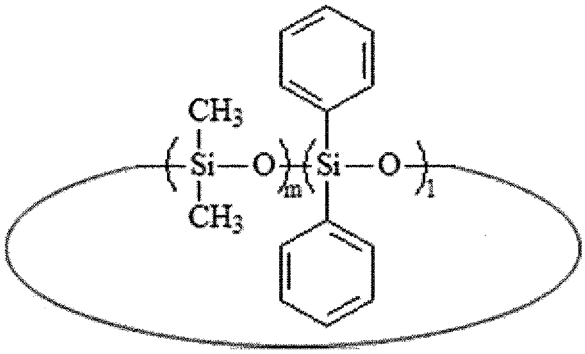

(2－1)

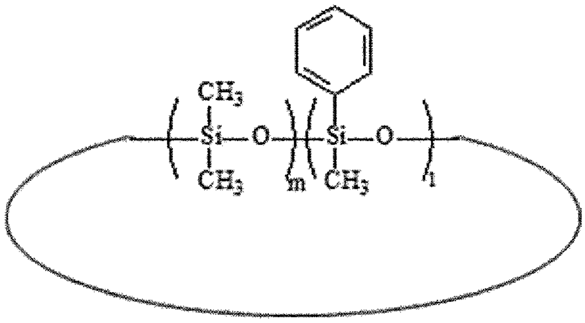

(2－2)

wherein m is an integer of 1 or greater, and
optionally, a silicon-containing compound represented by the following general formula (3):

[Chemical Formula 18]

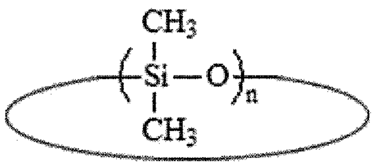

(3)

wherein n is an integer of 2 or greater; and
reducing the total amount of the silicon-containing compound of the general formula (2-1) or (2-2) in which m is an integer of 3 or greater based on the total weight of the silicon-containing compounds of the general formulas (1), (2-1), (2-2), and (3); wherein
the reducing step includes treating the composition at 200 to 300°C under 300 Pa or less for 2 to 12 hours.

[ADVANTAGEOUS EFFECTS OF INVENTION]

According to the present invention, it is possible to provide a composition including a silicon-containing compound, which enables further improvement in yellow index (YI value) of the thus obtained polyimide as compared with the case of using a conventional composition including a silicon-containing compound, and can produce a polyimide precursor composition capable of reducing foreign material generated in the polyimide production process. It should be noted that the above description should not be considered as disclosing all the embodiments of the present invention and all advantages related to the present invention. Further embodiments of the invention and its advantages will be apparent with reference to the following description.

BRIEF DESCRIPTION OF DRAWINGS

FIG. 1 is a schematic diagram illustrating the structure of a top-emission flexible organic EL display, which is the upper portion of a polyimide substrate.

DESCRIPTION OF EMBODIMENTS

Embodiments for carrying out the present invention (hereinafter abbreviated to "present embodiment") will be described below in more detail. It is to be understood, however, that the invention is not limited to the following embodiments and may implement various modifications within the scope of the gist thereof. Furthermore, in the present description, an upper limit and lower limit for ranges of various numerical values may be optionally combined.

<<Composition Including Silicon-Containing Compound>>

<Silicon-Containing Compound>

The composition of the present embodiment includes a silicon-containing compound represented by the following general formula (1):

[Chemical Formula 19]

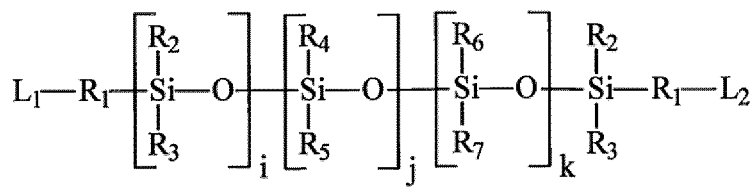

(1)

wherein a plurality of $R_1$ are each independently a single bond or a divalent organic group having 1 to 10 carbon atoms, $R_2$ and $R_3$ are each independently a monovalent organic group having 1 to 10 carbon atoms, at least one of which is a monovalent aliphatic hydrocarbon group having 1 to 5 carbon atoms, $R_4$ and $R_5$ are a monovalent organic group having 1 to 10 carbon atoms, at least one of which are each independently a monovalent aromatic group having 6 to 10 carbon atoms, $R_6$ and $R_7$ are each independently a monovalent organic group having 1 to 10 carbon atoms, at least one of which is an organic group having an unsaturated aliphatic hydrocarbon group, $L_1$ and $L_2$ are each independently an amino group, an anhydride group, an isocyanate group, a carboxyl group, an acid ester group, an acid halide group, a hydroxy group, an epoxy group, or a mercapto group, i and j are each independently an integer of 1 to 200, and k is an integer of 0 to 200.

$L_1$ and $L_2$ of the silicon-containing compound represented by the general formula (1) are not particularly limited, but are preferably an amino group or an anhydride group, and more preferably an amino group, from the viewpoint of the reactivity when a polyimide precursor is synthesized.

In the general formula (1), $R_1$ are each independently a single bond or a divalent organic group having 1 to 10 carbon atoms. The divalent organic group having 1 to 10 carbon atoms may be linear, cyclic, or branched, and may be saturated or unsaturated. Examples of the divalent aliphatic hydrocarbon group having 1 to 10 carbon atoms include linear or branched alkylene groups such as methylene, ethylene, n-propylene, i-propylene, n-butylene, s-butylene, t-butylene, n-pentylene, neopentylene, n-hexylene, n-heptylene, n-octylene, n-nonylene, and n-decylene groups; and cycloalkylene groups such as cyclopropylene, cyclobutylene, cyclopentylene, cyclohexylene, cycloheptylene, and cyclooctylene groups. The divalent aliphatic hydrocarbon group having 1 to 10 carbon atoms is preferably at least one selected from the group consisting of ethylene, n-propylene, and i-propylene.

In the general formula (1), $R_2$ and $R_3$ are each independently a monovalent organic group having 1 to 10 carbon atoms, at least one of which is a monovalent aliphatic hydrocarbon group having 1 to 5 carbon atoms. The monovalent organic group having 1 to 10 carbon atoms may be linear, cyclic, or branched, and may be saturated or unsaturated. Examples of the monovalent organic group having 1 to 10 carbon atoms include linear or branched alkyl groups such as methyl, ethyl, n-propyl, i-propyl, n-butyl, s-butyl, t-butyl, n-pentyl, neopentyl, n-hexyl, n-heptyl, n-octyl, n-nonyl, and n-decyl groups; cycloalkyl groups such as cyclopropyl, cyclobutyl, cyclopentyl, cyclohexyl, cycloheptyl, and cyclooctyl groups; and aromatic groups such as phenyl, tolyl, xylyl, $\alpha$-naphthyl, and $\beta$-naphthyl groups. The monovalent aliphatic hydrocarbon group having 1 to 5 carbon atoms may be linear, cyclic, or branched, and may be saturated or unsaturated.

Examples of the monovalent aliphatic hydrocarbon group having 1 to 5 carbon atoms include linear or branched alkyl groups such as methyl, ethyl, n-propyl, i-propyl, n-butyl, s-butyl, t-butyl, n-pentyl, and neopentyl groups; and cycloalkyl groups such as cyclopropyl, cyclobutyl, and cyclopentyl groups. The monovalent aliphatic hydrocarbon group having 1 to 5 carbon atoms is preferably at least one selected from the group consisting of methyl, ethyl, and n-propyl.

In the general formula (1), $R_4$ and $R_5$ are each independently a monovalent organic group having 1 to 10 carbon atoms, at least one of which is a monovalent aromatic group having 6 to 10 carbon atoms. The monovalent organic group having 1 to 10 carbon atoms may be linear, cyclic, or branched, and may be saturated or unsaturated. Examples of the monovalent organic group having 1 to 10 carbon atoms include linear or branched alkyl groups such as methyl, ethyl, n-propyl, i-propyl, n-butyl, s-butyl, t-butyl, n-pentyl, neopentyl, n-hexyl, n-heptyl, n-octyl, n-nonyl, and n-decyl groups; cycloalkyl groups such as cyclopropyl, cyclobutyl, cyclopentyl, cyclohexyl, cycloheptyl, and cyclooctyl groups; and aromatic groups such as phenyl, tolyl, xylyl, $\alpha$-naphthyl, and $\beta$-naphthyl groups. Examples of the monovalent aromatic group having 6 to 10 carbon atoms include phenyl, tolyl, xylyl, $\alpha$-naphthyl, and $\beta$-naphthyl groups, of which phenyl, tolyl, or xylyl is preferable.

In the general formula (1), $R_6$ and $R_7$ are each independently a monovalent organic group having 1 to 10 carbon atoms, at least one of which is an organic group having an unsaturated aliphatic hydrocarbon group. The monovalent organic group having 1 to 10 carbon atoms may be linear, cyclic, or branched, and examples thereof include linear or branched alkyl groups such as methyl, ethyl, n-propyl, i-propyl, n-butyl, s-butyl, t-butyl, n-pentyl, neopentyl, n-hexyl, n-heptyl, n-octyl, n-nonyl, and n-decyl groups; cycloalkyl groups such as cyclopropyl, cyclobutyl, cyclopentyl, cyclohexyl, cycloheptyl, and cyclooctyl groups; and aromatic groups such as phenyl, tolyl, xylyl, $\alpha$-naphthyl, and $\beta$-naphthyl groups. The monovalent organic group having 1 to 10 carbon atoms is preferably at least one selected from the group consisting of methyl, ethyl, and phenyl. The organic group having an unsaturated aliphatic hydrocarbon group may be an unsaturated aliphatic hydrocarbon group having 3 to 10 carbon atoms, and may be linear, cyclic, or branched. Examples of the unsaturated aliphatic hydrocarbon group having 3 to 10 carbon atoms include vinyl, allyl, propenyl, 3-butenyl, 2-butenyl, pentenyl, cyclopentenyl, hexenyl, cyclohexenyl, heptenyl, octenyl, nonenyl, decenyl, ethynyl, propynyl, butynyl, pentynyl, and hexynyl group. The unsaturated aliphatic hydrocarbon group having 3 to 10 carbon atoms is preferably at least one selected from the group consisting of vinyl, allyl, and 3-butenyl.

In the general formula (1), hydrogen atoms of $R_1$ to $R_7$ may be partially or totally substituted with halogen atoms such as F, Cl, and Br, or may be unsubstituted.

i and j are each independently an integer of 1 to 200, preferably an integer of 2 to 100, more preferably an integer of 4 to 80, and still more preferably an integer of 8 to 40. k is an integer of 0 to 200, preferably an integer of 0 to 50, more preferably an integer of 0 to 20, and still more preferably an integer of 0 to 5. From the viewpoint of controlling the molecular weight of the silicon-containing compound, i, j, and k satisfy: $0.05 \leq j/(i + j + k) \leq 0.50$.

<Low Molecular Weight Cyclic Siloxane>

The composition of the present embodiment includes at least one of low molecular weight cyclic siloxanes represented by the following general formula (2-1) or (2-2) in which m is an integer of 3 or greater (when simply referred to as "(2)", it means "(2-1) or (2-2)"). The composition of the present embodiment may or may not include a compound represented by the general formula (2-1) or (2-2) in which m is 1 or 2. The composition of the present embodiment may include only one of compounds represented by the general formulas (2-1) and (2-2), or may include both compounds. The compound represented by the general formula (2-1) or (2-2) is preferably a compound represented by the general formula (2-1). Namely, the resin composition of the present embodiment preferably includes at least a compound represented by the general formula (2-1):

[Chemical Formula 20]

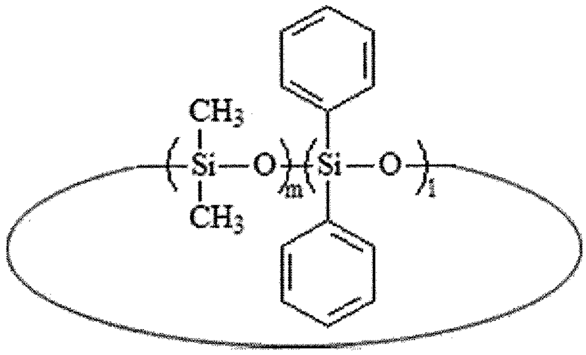

(2－1)

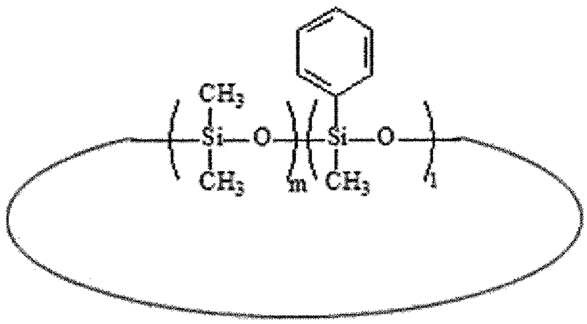

(2－2)

wherein m is an integer of 1 or greater, and preferably an integer of 2 or greater, and the subscript of $(Si(Ph)_2\text{-}O)$ in formula (2-1) and $(Si(Ph)(CH_3)\text{-}O)$ in formula (2-2) is the numeral 1.

The total amount of the compound of the general formula (2) in which m is 3 or greater is more than 0 ppm and 46,000 ppm or less, preferably more than 0 ppm and 10,000 ppm or less, and more preferably more than 0 ppm and 6,000 ppm or less, based on the total weight of the silicon-containing compounds of the general formulas (1), (2), and (3). The total amount of the compound represented by the general formula (2) means the total amount when the resin composition includes only one of the general formulas (2-1) and (2-2) and the total amount when the resin composition includes both formulas.

The total amount of the compound of the general formula (2) in which m is 3 to 5 may be preferably more than 0 ppm and 46,000 ppm or less, more preferably more than 0 ppm and 10,000 ppm or less, and still more preferably more than 0 ppm and 6,000 ppm or less, based on the total weight of the silicon-containing compounds of the general formulas (1), (2), and (3).

The total amount of the compound of the general formula (2) in which m is 3 may be preferably more than 0 ppm and 25,000 ppm or less, more preferably more than 0 ppm and 6,600 ppm or less, and still more preferably more than 0 ppm and 3,700 ppm or less, based on the total weight of the silicon-containing compounds of the general formulas (1), (2), and (3). The total amount of the compound of the general formula (2) in which m is 4 may be preferably more than 0 ppm and 15,000 ppm or less, more preferably more than 0 ppm and 2,500 ppm or less, and still more preferably more than 0 ppm and 1,400 ppm or less, based on the total weight of the silicon-containing compounds of the general formulas (1), (2), and (3). If the total amount of the compound represented by the general formula (2) is in the above range, the YI value of the thus obtained polyimide resin film further decreases, which is preferable.

The composition of the present embodiment may include, in addition to the above compound represented by the general formula (2), a compound represented by the following general formula (3):

[Chemical Formula 21]

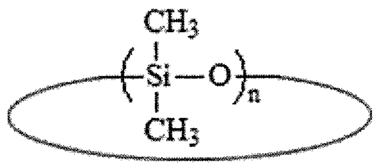

(3)

wherein n is an integer of 2 or greater, and preferably an integer of 3 or greater.

The amount of the compound of the general formula (3) in which n is an integer of 3 or greater is preferably more than 0 ppm and 5,000 ppm or less, more preferably more than 0 ppm and 1,000 ppm or less, and still more preferably more than 0 ppm and 500 ppm or less, based on the total weight of the silicon-containing compounds of the general formulas (1), (2), and (3). The total amount of the compound of the general formula (3) in which n is 3 to 8 may be preferably more than 0 ppm and 5,000 ppm or less, more preferably more than 0 ppm and 1,000 ppm or less, and still more preferably more than 0 ppm and 500 ppm or less, based on the total weight of the silicon-containing compounds of the general formulas (1), (2), and (3).

The total amount of the compound of the general formula (2) in which m is an integer of 3 or greater and the compound of the general formula (3) in which n is an integer of 3 or greater is preferably more than 0 ppm and 47,000 ppm or less, more preferably more than 0 ppm and 11,000 ppm or less, and still more preferably more than 0 ppm and 6,300 ppm or less, based on the weight of the silicon-containing compounds of the general formulas (1), (2), and (3). In this case, the total amount of the compound of the general formula (2) in which m is an integer of 3 or greater, preferably the total amount in which m is 3 to 5, may be preferably more than 0 ppm and 46,000 ppm or less, more preferably more than 0 ppm and 10,000 ppm or less, and still more preferably more than 0 ppm and 6,000 ppm or less, based on the total weight of the silicon-containing compounds of the general formulas (1), (2), and (3), If the total amount of the compound represented by the general formula (2) and the compound represented by the general formula (3) is in the above range, it is preferable in view of the fact that the total amount of foreign material adhered in the production process of the polyimide resin film is reduced.

<Foreign Material Count Number>

The smaller the total amount of the cyclic siloxane of the general formula (2) in which m is an integer of 3 or greater (preferably m is 3 to 5) and the cyclic siloxane of the general formula (3) in which n is an integer of 3 or greater (preferably n is 3 to 8), based on the weight of the silicon-containing compounds of the general formulas (1), (2), and (3), the smaller the amount of foreign material adhered in the production process of the polyimide resin film, which is preferable. Although the mechanism is unclear, the present inventors estimate as follows. Namely, in the production of the polyimide resin film, in one aspect, a polyimide precursor composition is applied to a support such as a glass substrate and a solvent is removed by heating in an oven at 100°C for 30 minutes, and then imidization is performed by continuously heating at a higher temperature, for example, 350°C for 1 hour in the same oven to form a polyimide resin film. The cyclic siloxane of the general formula (3) is more volatile than the cyclic siloxane of the general formula (2). Therefore, it is considered that when the solvent is removed, the cyclic siloxane of the general formula (3) is volatilized, and during imidization, the cyclic siloxane of the general formula (2) is volatilized and adhered in the oven. Particularly when a large number of samples are put into the oven, it is considered that larger amounts of cyclic siloxanes represented by the general formulas (2) and (3) are deposited in the oven, and when cyclic siloxanes fall, they become foreign material adhered to the polyimide resin film. Therefore, it is considered that the smaller the total amount of the cyclic siloxane of the general formula (2) in which m is 3 or greater and the cyclic siloxane of the general formula (3) in which n is 3 or greater, the smaller the amount of foreign material adhered in the production process of the polyimide resin film.

< <Polyimide Precursor>>

The composition of the present embodiment is used for producing a polyimide precursor in which a silicon-containing compound of the general formula (1), tetracarboxylic dianhydride, and diamine are copolymerized.

<Tetracarboxylic Dianhydride>

Examples of the tetracarboxylic dianhydride include pyromellitic dianhydride, 3,3',4,4'-biphenyltetracarboxylic dianhydride, 2,2',3,3'-biphenyltetracarboxylic dianhydride, 4,4'-(hexafluoroisopropylidene)diphthalic anhydride, 5-(2,5-dioxotetrahydro-3-furanyl)-3-methylcyclohexene-1,2-dicarboxylic anhydride, 1,2,3,4-benzenetetracarboxylic dianhydride, 3,3',4,4'-benzophenonetetracarboxylic dianhydride, 2,2',3,3'-benzophenonetetracarboxylic dianhydride, 3,3',4,4'-diphenylsulfonetetracarboxylic dianhydride, methylene-4,4'-diphthalic dianhydride, 1,1-ethylidene-4,4'-diphthalic dianhydride, 2,2-propylidene-4,4'-diphthalic dianhydride, 1,2-ethylene-4,4'-diphthalic dianhydride, 1,3-trimethylene-4,4'-diphthalic dianhydride, 1,4-tetramethylene-4,4'-diphthalic dianhydride, 1,5-pentamethylene-4,4'-diphthalic dianhydride, 4,4'-oxydiphthalic dianhydride, p-phenylenebis(trimellitate anhydride), thio-4,4'-diphthalic dianhydride, sulfonyl-4,4'-diphthalic dianhydride, 1,3-bis(3,4-dicarboxyphenyl)benzene dianhydride, 1,3-bis(3,4-dicarboxyphenoxy)benzene dianhydride, 1,4-bis(3,4-dicarboxyphenoxy)benzene dianhydride, 1,3-bis[2-(3,4-dicarboxyphenyl)-2-propyl]benzene dianhydride, 1,4-bis[2-(3,4-dicarboxyphenyl)-2-propyl]benzene dianhydride, bis[3-(3,4-dicarboxyphenoxy)phenyl] methane dianhydride, bis [4-(3,4-dicarboxyphenoxy)phenyl]methane dianhydride, 2,2-bis[3-(3,4-dicarboxyphenoxy)phenyl]propane dianhydride, 2,2-bis[4-(3,4-dicarboxyphenoxy)phenyl]propane dianhydride, bis(3,4-dicarboxyphenoxy)dimethylsilane dianhydride, 1,3-bis(3,4-dicarboxyphenyl)-1,1,3,3-tetramethyldisiloxane dianhydride, 2,3,6,7-naphthalenetetracarboxylic dianhydride, 1,4,5,8-naphthalenetetracarboxylic dianhydride, 1,2,5,6-naphthalenetetracarboxylic dianhydride, 3,4,9,10-perylenetetracarboxylic dianhydride, 2,3,6,7-anthracenetetracarboxylic dianhydride, and 1,2,7,8-phenanthrenetetracarboxylic dianhydride. The tetracarboxylic acid dianhydrides may be used alone or in combination of two or more thereof.

The tetracarboxylic dianhydride is preferably at least one selected from the group consisting of pyromellitic dianhydride (PMDA), 3,3',4,4'-biphenyltetracarboxylic dianhydride (BPDA), 4,4'-oxydiphthalic anhydride, cyclohexanetetracarboxylic dianhydride, and cyclobutanetetracarboxylic dianhydride.

Of these, pyromellitic dianhydride (PMDA) and biphenyltetracarboxylic dianhydride (BPDA) are preferable from the viewpoint of mechanical properties of polyimide film, optical properties such as low thickness direction retardation (Rth) and low yellow index (YI value), and high glass transition temperature. The polyimide precursor having a structure represented by the general formula (1) is a copolymer of tetracarboxylic dianhydride and diamine, and the tetracarboxylic dianhydride more preferably includes pyromellitic dianhydride (PMDA).

The total content of pyromellitic dianhydride (PMDA) and biphenyltetracarboxylic dianhydride (BPDA) in the whole acid dianhydride is preferably 60 mol% or more, more preferably 80 mol% or more, and still more preferably 100 mol%, from the viewpoint of low Rth and YI value of the polyimide film, and high glass transition temperature.

The content of pyromellitic dianhydride (PMDA) in the whole acid dianhydride is preferably 0 mol% or more, preferably 10 mol% or more, and preferably 20 mol% or more, yet preferably 100 mol% or less, and preferably 90 mol% or less, from the viewpoint of high glass transition temperature of the polyimide film.

The content of biphenyltetracarboxylic dianhydride (BPDA) in the whole acid dianhydride is preferably 0 mol% or more, preferably 10 mol% or more, and preferably 20 mol% or more, yet preferably 100 mol% or less, and preferably 90 mol% or less, from the viewpoint of low Rth and YI value of the polyimide film.

The content ratio of pyromellitic dianhydride (PMDA):biphenyltetracarboxylic dianhydride (BPDA) in the acid dianhydride is preferably 20:80 to 80:20, and more preferably 30:70 to 70:30, from the viewpoint of simultaneously satisfying low Rth and YI value of the polyimide film, high glass transition temperature, and elongation.

<Diamine>

Examples of the diamine include diaminodiphenyl sulfone (e.g., 4,4'-diaminodiphenyl sulfone, 3,3'-diaminodiphenyl sulfone), p-phenylenediamine, m-phenylenediamine, 4,4'-diaminodiphenyl sulfide, 3,4'-diaminodiphenyl sulfide, 3,3'-diaminodiphenyl sulfide, 4,4'-diaminobiphenyl, 3,4'-diaminobiphenyl, 3,3'-diaminobiphenyl, 4,4'-diaminobenzophenone, 3,4'-diaminobenzophenone, 3,3'-diaminobenzophenone, 4,4'-diaminodiphenylmethane, 3,4'-diaminodiphenylmethane, 3,3'-diaminodiphenylmethane, 1,4-bis(4-aminophenoxy)benzene, 1,3-bis(4-aminophenoxy)benzene, 1,3-bis(3-aminophenoxy)benzene, bis[4-(4-aminophenoxy)phenyl]sulfone, 4,4-bis(4-aminophenoxy)biphenyl, 4,4-bis(3-aminophenoxy)biphenyl, bis[4-(4-aminophenoxy)phenyl]ether, bis[4-(3-aminophenoxy)phenyl]ether, 1,4-bis(4-aminophenyl)benzene, 1,3-bis(4-aminophenyl)benzene, 9,10-bis(4-aminophenyl)anthracene, 2,2-bis(4-aminophenyl)propane, 2,2-bis(4-aminophenyl)hexafluoropropane, 2,2-bis[4-(4-aminophenoxy)phenyl)propane, 2,2-bis[4-(4-aminophenoxy)phenyl)hexafluoropropane, and 1,4-bis(3-aminopropyldimethylsilyl)benzene. The diamines may be used alone or in combination of two or more thereof.

The diamine is preferably at least one selected from the group consisting of 4,4'-diaminodiphenyl sulfone, m-tolidine, p-phenylenediamine, 2,2'-bis(trifluoromethyl)benzidine, and 2,2'-bis[4-(4-aminophenoxy)phenyl]propane.

The content of diaminodiphenyl sulfone in the whole diamine may be 50 mol% or more, or 70 mol% or more, or 90 mol% or more, or 95 mol% or more. The larger the amount of diaminodiphenyl sulfone, the more preferable since the YI value of the polyimide film is reduced and high glass transition temperature is obtained. As the diaminodiphenyl sulfone, 4,4'-diaminodiphenyl sulfone is particularly preferable from the viewpoint of reducing the YI value.

It is preferable to copolymerize diaminodiphenyl sulfone with other diamines. Other diamines to be copolymerized with diaminodiphenyl sulfone are preferably diamidobiphenyls, and more preferably diaminobis(trifluoromethyl)biphenyl (TFMB), from the viewpoint of high heat resistance and low YI value of the polyimide film. The content of diaminobis(trifluoromethyl)biphenyl (TFMB) in the whole diamine is preferably 20 mol% or more, and more preferably 30 mol% or more, from the viewpoint of low YI value of the polyimide film. From the viewpoint of design which allows the diamine to contain other advantageous diamines such as diaminodiphenyl sulfone, the content of TFMB is preferably 80 mol% or less, and more preferably 70 mol% or less.

<Dicarboxylic Acid>

It is possible to use, as an acid component for forming a polyimide precursor in the present embodiment, dicarboxylic acid may be used, in addition to an acid dianhydride (e.g., tetracarboxylic dianhydride exemplified above) as long as the performance is not impaired. Namely, the polyimide precursor of the present disclosure may be a polyamideimide precursor. A film obtained from such a polyimide precursor may have various properties such as mechanical elongation, glass transition temperature Tg, and YI value. Examples of the dicarboxylic acid used include an aromatic ring-containing dicarboxylic acid and an alicyclic dicarboxylic acid. Particularly preferred is at least one compound selected from the group consisting of an aromatic dicarboxylic acid having 8 to 36 carbon atoms and an alicyclic dicarboxylic acid having 6 to 34 carbon atoms. The number of carbon atoms as used herein also includes the number of carbon atoms contained in the carboxyl group. Of these, an aromatic ring-containing dicarboxylic acid is preferable.

Specific examples of the aromatic ring-containing dicarboxylic acid include isophthalic acid, terephthalic acid, 4,4'-biphenyldicarboxylic acid, 3,4'-biphenyldicarboxylic acid, 3,3'-biphenyldicarboxylic acid, 1,4-naphthalenedicarboxylic acid, 2,3-naphthalenedicarboxylic acid, 1,5-naphthalenedicarboxylic acid, 2,6-naphthalenedicarboxylic acid, 4,4'-sulfonylbisbenzoic acid, 3,4'-sulfonylbisbenzoic acid, 3,3'-sulfonylbisbenzoic acid, 4,4'-oxybisbenzoic acid, 3,4'-oxybisbenzoic acid, 3,3'-oxybisbenzoic acid, 2,2-bis(4-carboxyphenyl)propane, 2,2-bis(3-carboxyphenyl)propane, 2,2'-dimethyl-4,4'-biphenyldicarboxylic acid, 3,3'-dimethyl-4,4'-biphenyldicarboxylic acid, 2,2'-dimethyl-3,3'-biphenyldicarboxylic acid, 9,9-bis(4-(4-carboxyphenoxy)phenyl)fluorene, 9,9-bis(4-(3-carboxyphenoxy)phenyl)fluorene, 4,4'-bis(4-carboxyphenoxy)biphenyl, 4,4'-bis(3-carboxyphenoxy)biphenyl, 3,4'-bis(4-carboxyphenoxy)biphenyl, 3,4'-bis(3-carboxyphenoxy)biphenyl, 3,3'-bis(4-carboxyphenoxy)biphenyl, 3,3'-bis(3-carboxyphenoxy)biphenyl, 4,4'-bis(4-carboxyphenoxy)-p-terphenyl, 4,4'-bis(4-carboxyphenoxy)-m-terphenyl, 3,4'-bis(4-carboxyphenoxy)-p-terphenyl, 3,3'-bis(4-carboxyphenoxy)-p-terphenyl, 3,4'-bis(4-carboxyphenoxy)-m-terphenyl, 3,3'-bis(4-carboxyphenoxy)-m-terphenyl, 4,4'-bis(3-carboxyphenoxy)-p-terphenyl, 4,4'-bis(3-carboxyphenoxy)-m-terphenyl, 3,4'-bis(3-carboxyphenoxy)-p-terphenyl, 3,3'-bis(3-carboxyphenoxy)-p-terphenyl, 3,4'-bis(3-carboxyphenoxy)-m-terphenyl, 3,3'-bis(3-carboxyphenoxy)-m-terphenyl, 1,1-cyclobutanedicarboxylic acid, 1,4-cyclohexanedicarboxylic acid, 1,2-cyclohexanedicarboxylic acid, 4,4'-benzophenonedicarboxylic acid, 1,3-phenylenediacetic acid, and 1,4-phenylenediacetic acid; and 5-aminoisophthalic acid derivatives mentioned in WO 2005/068535. When these dicarboxylic acids are actually copolymerized with the polymer, they may be used in the form of an acid chloride derivative derived from thionyl chloride, an active ester form, etc.

<Weight-Average Molecular Weight>

In the present embodiment, the weight-average molecular weight of the polyimide precursor is preferably 50,000 or greater, and more preferably 60,000 or greater, from the viewpoint of reducing the YI value of the polyimide film. Further, from the viewpoint of reducing the haze of the polyimide film, the weight-average molecular weight of the polyimide precursor is preferably 150,000 or less, and more preferably 120,000 or less. The desired weight-average molecular weight of the polyimide precursor may vary depending on the desired application, the type of polyimide precursor, the content of the solid component of the polyimide precursor composition, and the type of solvent that the polyimide precursor composition may contain.

Preferred Embodiments of Polyimide Precursor

In the present embodiment, particularly preferred polyimide precursors include the following (1) to (9).

(1) A polycondensate in which an acid dianhydride component is pyromellitic dianhydride (PMDA) and biphenyltetracarboxylic dianhydride (BPDA), and a diamine component is diaminodiphenyl sulfone (DAS) and a silicon-containing diamine. More preferably, the weight-average molecular weight is 80,000 to 100,000 and the content of a solid component is 10 to 25% by weight.

(2) A polycondensate in which an acid dianhydride component is pyromellitic dianhydride (PMDA) and biphenyltetracarboxylic dianhydride (BPDA), and a diamine component is diaminobis(trifluoromethyl)biphenyl (TFMB) and a silicon-containing diamine. More preferably, the weight-average molecular weight is 65,000 to 90,000 and the content of a solid component is 10 to 25% by weight.

(3) A polycondensate in which an acid dianhydride component is pyromellitic dianhydride (PMDA) and biphenyltetracarboxylic dianhydride (BPDA), and a diamine component is diaminodiphenylsulfone (DAS), diaminobis(trifluoromethyl)biphenyl (TFMB), and a silicon-containing diamine. More preferably, the weight-average molecular weight is 95,000 to 120,000 and the content of a solid component is 10 to 25% by weight.

(4) A polycondensate in which an acid dianhydride component is pyromellitic dianhydride (PMDA), and a diamine component is diaminodiphenyl sulfone (DAS) and a silicon-containing diamine. More preferably, the weight-average molecular weight is 100,000 to 110,000 and the content of a solid component is 10 to 25% by weight.

(5) A polycondensate in which an acid dianhydride component is pyromellitic dianhydride (PMDA), and a diamine component is diaminobis(trifluoromethyl)biphenyl (TFMB) and a silicon-containing diamine. More preferably, the weight-average molecular weight is 100,000 to 110,000 and the content of a solid component is 10 to 25% by weight.

(6) A polycondensate in which an acid dianhydride component is pyromellitic dianhydride (PMDA), and a diamine component is diaminodiphenyl sulfone (DAS), diaminobis(trifluoromethyl)biphenyl (TFMB), and a silicon-containing diamine. More preferably, the weight-average molecular weight is 110,000 to 120,000 and the content of a solid component is 10 to 25% by weight.

(7) A polycondensate in which an acid dianhydride component is biphenyltetracarboxylic dianhydride (BPDA), and a diamine component is diaminodiphenyl sulfone (DAS) and a silicon-containing diamine. More preferably, the weight-average molecular weight is 70,000 to 80,000 and the content of a solid component is 10 to 25% by weight.

(8) A polycondensate in which an acid dianhydride component is biphenyltetracarboxylic dianhydride (BPDA), and a diamine component is diaminodiphenyl sulfone (DAS), diaminobis(trifluoromethyl)biphenyl (TFMB), and a silicon-containing diamine. More preferably, the weight-average molecular weight is 90,000 to 100,000 and the content of a solid component is 10 to 25% by weight.

(9) A polycondensate in which an acid dianhydride component is biphenyltetracarboxylic dianhydride (BPDA), and a diamine component is diaminobis(trifluoromethyl)biphenyl (TFMB), and a silicon-containing diamine. More preferably, the weight-average molecular weight is 70,000 to 80,000 and the content of a solid component is 10 to 25% by weight.

In the material component of the polycondensate of (1) to (9), the silicon-containing diamine is preferably diamino(poly)siloxane represented by the general formula (1). In this case, the number-average molecular weight of the diamino(poly)siloxane is preferably 500 to 12,000, and the diamino(poly)siloxane is more preferably a both-end amine-modified methylphenylsilicone oil.

<Solvent>

A polyimide precursor is typically used as a composition containing a polyimide precursor (also referred to as polyimide precursor composition), and the polyimide precursor composition typically contains a solvent. The solvent is preferably a solvent having satisfactory solubility of the polyimide precursor and is capable of appropriately controlling the solution viscosity of the composition, and it is possible to use a reaction solvent of the polyimide precursor as the solvent of the composition. Of these, preferred are N-methyl-2-pyrrolidone (NMP), γ-butyrolactone (GBL), and a compound represented by the general formula (5). Specific examples of the composition of the solvent include N-methyl-2-pyrrolidone (NMP) alone, or a solvent mixture of N-methyl-2-pyrrolidone (NMP) and γ-butyrolactone (GBL). The weight ratio of NMP and GBL may be, for example, NMP:GBL (weight ratio) = 10:90 to 90:10.

<Additional Components>

The polyimide precursor composition may include additional components, in addition to a polyimide precursor, a low molecular weight cyclic siloxane, and a solvent. Examples of additional components include a surfactant and an alkoxysilane compound.

Surfactant

It is possible to improve the coatability of the composition by adding a surfactant to the polyimide precursor composition. Specifically, it is possible to prevent the occurrence of streaks in the coating film. Examples of such a surfactant include silicone-based surfactants, fluorine-based surfactants, and other nonionic surfactants. Examples of the silicone-based surfactant include organosiloxane polymers KF-640, 642, 643, KP-341, X-70-092, X-70-093 (trade names, manufactured by Shin-Etsu Chemical Co., Ltd.); SH-28PA, SH-190, SH-193, SZ-6032, SF-8428, DC-57, DC-190 (trade names, manufactured by Dow Corning Toray Silicone Co., Ltd.); SILWET L-77, L-7001, FZ-2105, FZ-2120, FZ-2154, FZ-2164, FZ-2166, L-7604 (trade names, manufactured by Nippon Unicar Co. Ltd.); DBE-814, DBE-224, DBE-621, CMS-626, CMS-222, KF-352A, KF-354L, KF-355A, KF-6020, DBE-821, DBE-712 (Gelest), BYK-307, BYK-310, BYK-378, BYK-333 (trade names, manufactured by BYK-Chemie Japan); Glanol (trade name, manufactured by Kyoeisha

Chemical Co., Ltd.). Examples of the fluorine-based surfactant include Megaface F171, F173, R-08 (trade names, manufactured by Dainippon Ink and Chemicals, Inc.); and Fluorad FC4430, FC4432 (trade names, Sumitomo 3M Limited). Examples of other nonionic surfactants include polyoxyethylene lauryl ether, polyoxyethylene stearyl ether, polyoxyethylene oleyl ether, and polyoxyethylene octyl phenol ether.

Of these surfactants, silicone-based surfactants and fluorine-based surfactants are preferable from the viewpoint of the coatability (suppression of streaks) of the polyimide precursor composition, and silicone-based surfactants are preferable from the viewpoint of reducing an influence on the YI value and total light transmittance due to the oxygen concentration during the curing step. When the surfactant is used, the content is preferably 0.001 to 5 parts by weight, and more preferably 0.01 to 3 parts by weight, based on 100 parts by weight of the polyimide precursor in the polyimide precursor composition.

Alkoxysilane Compound

When the polyimide film obtained from the polyimide precursor composition is used for a flexible substrate, etc., the polyimide precursor composition can contain an alkoxysilane compound in an amount of 0.01 to 20 parts by weight based on 100 parts by weight of the polyimide precursor, from the viewpoint of obtaining satisfactory adhesiveness between the support and the polyimide film in the production process. If the content of the alkoxysilane compound is 100 parts by weight or more based on 100 parts by weight of the polyimide precursor, it is possible to obtain satisfactory adhesiveness between the support and the polyimide film. The content of the alkoxysilane compound is preferably 0.02 to 15 parts by weight, more preferably 0.05 to 10 parts by weight, and still more preferably 0.1 to 8 parts by weight, based on 100 parts by weight of the polyimide precursor, from the viewpoint of the storage stability of the polyimide precursor composition. Use of the alkoxysilane compound enables, in addition to an improvement in adhesiveness mentioned above, an improvement in coatability of the polyimide precursor composition (suppression of uneven streaks), and reduction in influence on the YI value of the polyimide film due to the oxygen concentration during curing.

Examples of the alkoxysilane compound include 3-ureidopropyltriethoxysilane, bis(2-hydroxyethyl)-3-aminopropyltriethoxysilane, 3-glycidoxypropyltrimethoxysilane, γ-aminopropyltrimethoxysilane, γ-aminopropyltripropoxysilane, γ-aminopropyltributoxysilane, γ-aminoethyltriethoxysilane, γ-aminoethyltripropoxysilane, γ-aminoethyltributoxysilane, γ-aminobutyltriethoxysilane, γ-aminobutyltrimethoxysilane, γ-aminobutyltripropoxysilane, γ-aminobutyltributoxysilane, phenylsilanetriol, trimethoxyphenylsilane, trimethoxy(p-tolyl)silane, diphenylsilanediol, dimethoxydiphenylsilane, diethoxydiphenylsilane, dimethoxydi-p-tolylsilane, triphenylsilanol, and alkoxysilane compounds represented by the following structures. The alkoxysilane compounds may be used alone or in combination of two or more thereof.

[Chemical Formula 22]

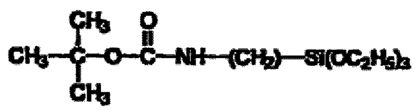

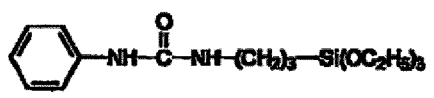

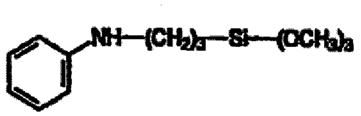

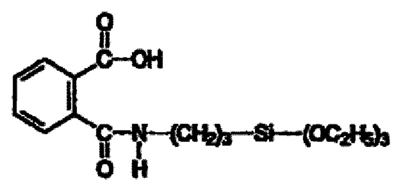

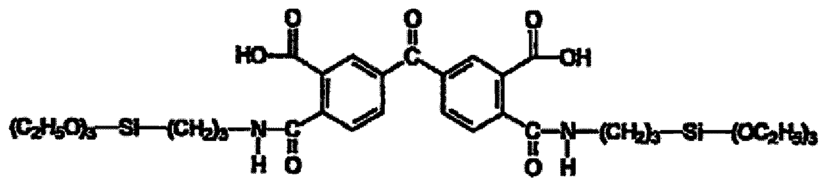

<<Purification Method of Silicon-Containing Compound>>

The composition including the silicon-containing compound of the present embodiment is obtained by purifying the composition including the silicon-containing compound represented by the general formula (1) to reduce the total amount of the compound of the general formula (2) in which m is 3 or greater to more than 0 ppm and 46,000 ppm or less, based on the weight of the silicon-containing compounds represented by (1), (2), and (3).

Examples of the method for purifying the silicon-containing compound include a method in which stripping is performed while blowing an inert gas, for example, nitrogen gas, into the silicon-containing compound in an arbitrary vessel. The stripping temperature is preferably 200°C or higher and 300°C or lower, more preferably 220°C or higher and 300°C or lower, and still more preferably 240°C or higher and 300°C or lower. Stripping is preferably performed under the stripping vapor pressure of 300 Pa or less. The lower the vapor pressure is, the more preferable, and it is preferably 1000 Pa or less, more preferably 300 Pa or less, still more preferably 200 Pa or less, and yet more preferably 133.32 Pa (1 mmHg) or less. The stripping time is preferably 2 hours or more and 24 hours or less, more preferably 4 hours or more and 12 hours or less, and still more preferably 6 hours or more and 10 hours or less. By adjusting to the above conditions, it is possible to efficiently remove the compound of the general formula (2) in which m is 3 or less, and to control the total amount of the compound of the general formula (2) in which m is 3 or less and the compound of the general formula (3) in which n is 3 or less within a preferable range.

<<Production Method of Polyimide Precursor Composition>>

<Synthesis of Polyimide Precursor>

The polyimide precursor can be synthesized by a polycondensation reaction of a composition including the silicon-containing compound of the present embodiment, an acid dianhydride, and a polycondensation component containing diamine. In a preferred aspect, the polycondensation component is composed of a composition including the silicon-containing compound of the present embodiment, an acid dianhydride, and diamine. The polycondensation reaction is preferably performed in a suitable solvent. Specifically, for example, there is exemplified a method in which a predetermined amount of a diamine component and a silicon-containing compound are dissolved in a solvent, and then a predetermined amount of acid dianhydride is added to the thus obtained diamine solution, followed by stirring.

The molar ratio of the acid dianhydride to the diamine when synthesizing the polyimide precursor is preferably in a range of acid dianhydride:diamine =100:90 to 100:110 (0.90 to 1.10 parts by mol of diamine based on 1 part by mol of acid dianhydride), and more preferably 100:95 to 100:105 (0.95 to 1.05 parts by mol of diamine based on 1 part by mol of acid dianhydride), from the viewpoint of increasing the molecular weight of the polyimide precursor resin and the slit coating property of the polyimide precursor composition.

It is possible to control the molecular weight of the polyimide precursor by the types of the acid dianhydride, the diamine, and the silicon-containing compound, adjustment of the molar ratio of the acid dianhydride to the diamine, addition of a terminal blocking agent, adjustment of the reaction conditions, etc. As the molar ratio of the acid dianhydride component to the diamine component becomes closer to 1:1, and the amount of the terminal blocking agent used becomes smaller, it is possible to increase the molecular weight of the polyimide precursor.

It is recommended to use high-purity products as the acid dianhydride component and the diamine component. The purity is preferably 98% by weight or greater, more preferably 99% by weight or greater, and still more preferably 99.5% by weight or greater. It is also possible to highly purify by reducing the water content in the acid dianhydride component and the diamine component. When using a plurality of types of acid dianhydride components and/or a plurality of types of diamine components, it is preferable that the whole acid dianhydride component and the whole diamine component have the purity mentioned above, and it is more preferable that all types of the acid dianhydride components and the diamine components have the purity mentioned above.

The solvent for the reaction is not particularly limited as long as it can dissolve the acid dianhydride component and the diamine component, and the thus obtained polyimide precursor, and is capable of obtaining a high molecular weight polymer. Examples of such a solvent include aprotic solvents, phenol-based solvents, and ether- and glycol-based solvents. Examples of the aprotic solvent include N,N-dimethylformamide (DMF), N,N-dimethylacetamide (DMAc), N-methyl-2-pyrrolidone (NMP), N-methylcaprolactam, 1,3-dimethylimidazolidinone, tetramethylurea, and amide-based solvents represented by the following general formula (5):

[Chemical Formula 23]

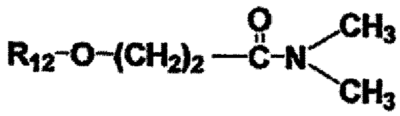

(5)

wherein $R_{12}$ is Equamide M100 represented by a methyl group (trade name: manufactured by Idemitsu Kosan Co., Ltd.) and $R_{12}$ is Equamide B100 represented by an n-butyl group (trade name: manufactured by Idemitsu Kosan Co., Ltd.); lactone-based solvents such as γ-butyrolactone and γ-valerolactone; phosphorus-containing amide-based solvents such as hexamethylphosphoric amide and hexamethylphosphinetriamide; sulfur-containing solvents such as dimethyl sulfone, dimethyl sulfoxide, and sulfolane; ketone-based solvents such as cyclohexanone and methylcyclohexanone; tertiary amine-based solvents such as picoline and pyridine; and ester-based solvents such as acetic acid (2-methoxy-1-methylethyl).

Examples of the phenol-based solvent include phenol, o-cresol, m-cresol, p-cresol, 2,3-xylenol, 2,4-xylenol, 2,5-xylenol, 2,6-xylenol, 3,4-xylenol, and 3,5-xylenol.

Examples of the ether- and glycol-based solvents include 1,2-dimethoxyethane, bis(2-methoxyethyl)ether, 1,2-bis(2-methoxyethoxy)ethane, bis[2-(2-methoxyethoxy)ethyl]ether, tetrahydrofuran, and 1,4-dioxane.

These solvents may be used alone or in combination of two or more thereof.

The boiling point of the solvent used for synthesizing the polyimide precursor under normal pressure is preferably 60 to 300°C, more preferably 140 to 280°C, and still more preferably 170 to 270°C. If the boiling point of the solvent is lower than 300°C, the drying step becomes short. If the boiling point of the solvent is 60° C or higher, the surface of the resin film is unlikely to be roughened and bubbles are unlikely to be mixed into the resin film during the drying step, thus making it possible to obtain a more uniform film. In particular, it is preferable to use a solvent having a boiling point of 170 to 270°C and/or a vapor pressure of 250 Pa or less at 20° C from the viewpoint of the solubility and reduction of edge abnormality during coating. More specifically, at least one selected from the group consisting of N-methyl-2-pyrrolidone (NMP), γ-butyrolactone (GBL), and a compound represented by the general formula (5) is preferable.

The water content in the solvent is preferably, for example, 3,000 ppm by weight or less in order to allow the polycondensation reaction to proceed well. Moreover, in the polyimide precursor composition of the present embodiment, the content of molecules having a molecular weight of less than 1,000 is preferably less than 5% by weight. The reason for the presence of the molecule having a molecular weight of less than 1,000 in the polyimide precursor composition is considered to be attributed to the water content of the solvent or the raw materials (acid dianhydride, diamine) used during the synthesis. Namely, it is conjectured that the anhydride groups of the acid dianhydride monomer are partially hydrolyzed by water to generate a carboxy group and remains as a low molecular fraction without propagation to a high molecular weight polymer. Therefore, the water content of the solvent used for the polycondensation reaction is preferably as small as possible. The water content of the solvent is preferably 3,000 ppm by weight or less, and more preferably 1,000 ppm by weight or less. Similarly, the amount of water contained in the raw materials is also preferably set at 3,000 ppm by weight or less, and more preferably 1,000 ppm by weight or less.

The water content of the solvent is probably associated with grades of the solvent used (dehydration grade, general purpose grade, etc.), solvent containers (bottle, 18 L can, canister can, etc.), storage conditions of the solvent (with or without noble gas-filling, etc.), a period of time from opening to use (whether used immediately after opening or used after an elapsed of time after opening, etc.). Moreover, the water content may also be associated with noble gas substitution in a reactor before synthesis, and with noble gas circulation during synthesis, etc. Therefore, when synthesizing the polyimide precursor, it is recommended to use a high-purity product as raw materials and use a solvent with a small amount of water, and to take measures so that water from the environment is not mixed with the reaction system before and during the reaction.

When dissolving each polycondensation component in a solvent, it may be heated if necessary. From the viewpoint of obtaining a polyimide precursor having a high degree of polymerization, the reaction temperature during the synthesis of the polyimide precursor may be preferably 0 to 120°C, 40 to 100°C, or 60 to 100°C, and the polymerization time may be preferably 1 to 100 hours, or 2 to 10 hours. By setting the polymerization time at 1 hour or longer, a polyimide precursor having a uniform degree of polymerization can be obtained, and by setting the polymerization time at 100 hours or shorter, a polyimide precursor having a high degree of polymerization can be obtained.

The polyimide precursor composition may include other additional polyimide precursors, in addition to the polyimide precursor of the present embodiment. However, the weight ratio of the additional polyimide precursor is

preferably 30% by weight or less, and more preferably 10% by weight or less, based on the total amount of the polyimide precursors in the polyimide precursor composition, from the viewpoint of reducing the oxygen dependency of YI value and total light transmittance of the polyimide film.

The polyimide precursor in the present embodiment may be partially imidized (partial imidization). When it is partially imidized, it is possible to improve the viscosity stability when storing the polyimide precursor composition. The imidization ratio in this case is preferably 5% or greater, and more preferably 8% or greater, yet preferably 80% or less, more preferably 70% or less, and still more preferably 50% or less, from the viewpoint of the balance between the solubility of the polyimide precursor in the polyimide precursor composition and the storage stability of the solution. This partial imidization is attained by heating the polyimide precursor, followed by cyclodehydration thereof. This heating treatment can be performed at a temperature of preferably 120 to 200°C, and more preferably 150 to 180°C, and can be performed preferably for 15 minutes to 20 hours, and more preferably for 30 minutes to 10 hours.

It is possible to use, as the polyimide precursor of the present embodiment, a compound in which the carboxylic acid groups are partially or totally esterified by adding N,N-dimethylformamide dimethyl acetal or N,N-dimethylformamide diethyl acetal to the polyamic acid obtained by the above reaction, followed by heating. The esterification can improve the viscosity stability during storage. These ester-modified polyamic acids can also be obtained by a method for sequentially reacting the aforementioned acid dianhydride component with one equivalent of a monohydric alcohol relative to the anhydride group, and with a dehydration condensation agent such as thionyl chloride or dicyclohexylcarbodiimide, followed by the condensation reaction with a diamine component.

<Preparation of Polyimide Precursor Composition>

If the solvent used when synthesizing the polyimide precursor is the same as the solvent contained in the polyimide precursor composition, the polyimide precursor solution thus synthesized can be used as it is. If necessary, one or more additional solvents and additional components may be added to the polyimide precursor at a temperature within a range of room temperature (25°C) to 80°C, followed by stirring and mixing to obtain a polyimide precursor composition. This stirring and mixing can be performed using an appropriate device such as a Three-One Motor (manufactured by Shinto Kagaku Co., Ltd.) equipped with stirring blades and a rotation-revolution mixer. It may be heated to 40 to 100°C as necessary.

When the solvent used when synthesizing the polyimide precursor and the solvent to be contained in the polyimide precursor composition are different, the solvent in the solution of the synthesized polyimide precursor may be removed to isolate the polyimide precursor by an appropriate method such as reprecipitation and solvent evaporation. At a temperature in a range of room temperature (25°C) to 80°C, a desired solvent and additional components as necessary are added to the isolated polyimide precursor, followed by mixing and stirring to prepare a polyimide precursor composition.

After preparing the polyimide precursor composition as mentioned above, the polyimide precursor may partially be subjected to dehydration imidization (partial imidization) by heating the composition to such an extent that a polymer does not precipitate, for example, at 130 to 200°C, for example, for 5 minutes to 2 hours. The imidization ratio can be controlled by setting the heating temperature and the heating time. By partial imidization of the polyimide precursor, it is possible to improve the viscosity stability when storing the polyimide precursor composition.

The solution viscosity of the polyimide precursor composition is preferably 500 to 100,000 mPa·s, more preferably 1,000 to 50,000 mPa·s, and still more preferably 3,000 to 20,000 mPa·s, from the viewpoint of the slit coating performance. Specifically, the viscosity is preferably 500 mPa·s or higher, more preferably 1,000 mPa·s or higher, and still more preferably 3,000 mPa·s or higher, in terms of preventing liquid leakage from the slit nozzle. The viscosity is preferably 100,000 mPa·s or lower, more preferably 50,000 mPa·s or lower, and still more preferably 20,000 mPa·s or lower, in terms of suppressing nozzle clogging.

Regarding the solution viscosity of the polyimide precursor composition during synthesis of the polyimide precursor, when it is higher than 200,000 mPa·s, there may arise a problem of difficulty in stirring during synthesis. However, even if the solution has a high viscosity during synthesis, it is possible to obtain a composition having a handleable viscosity by adding a solvent and stirring after completion of the reaction. The solution viscosity of the polyimide precursor composition is a value as measured at 23°C using an E-type viscometer (for example, VISCONICEHD, manufactured by Toki Sangyo Co., Ltd.).

The water content of the polyimide precursor composition of the present embodiment is preferably 3,000 ppm by weight or less, more preferably 2,500 ppm by weight or less, still more preferably 2,000 ppm by weight or less, yet more preferably 1,500 ppm by weight or less, particularly preferably 1,000 ppm by weight or less, particularly preferably 500 ppm by weight or less, particularly preferably 300 ppm by weight or less, and particularly preferably 100 ppm by weight or less, from the viewpoint of the viscosity stability when storing the polyimide precursor composition.

<<Polyimide Film and Production Method>>

A polyimide film (hereinafter also referred to as polyimide resin film) can be provided using the polyimide precursor composition. The method for producing a polyimide film includes: a coating step of coating a surface of a support with the polyimide precursor composition; a film forming step of forming a polyimide resin film by heating the polyimide precursor composition; and a stripping step of stripping the polyimide resin film from the support.

<Coating Step>

In the coating step, a surface of a support is coated with the polyimide precursor composition. The support is not particularly limited as long as it has heat resistance to the heating temperature in the subsequent film forming step (heating step) and exhibits satisfactory stripping property in the stripping step. Examples of the support include a glass substrate, for example, an alkali-free glass substrate; a silicon wafer; substrates made of resins such as polyethylene terephthalate (PET), oriented polypropylene (OPP), polyethylene glycol terephthalate, polyethylene glycol naphthalate, polycarbonate, polyimide, polyamideimide, polyether imide, polyether ether ketone, polyether sulfone, polyphenylene sulfone, and polyphenylene sulfide; and substrates made of metals such as stainless steel, alumina, copper, and nickel.

When forming a thin polyimide film, for example, a glass substrate and a silicon wafer are preferable, and when forming a thick polyimide film or polyimide sheet, for example, polyethylene terephthalate (PET) and oriented polypropylene (OPP) are preferable.

Examples of the coating method commonly include coating means such as a doctor blade knife coater, an air knife coater, a roll coater, a rotary coater, a flow coater, a die coater, and a bar coater; coating methods such as a spin coating method, a spray coating method, and a dip coating method; and printing techniques represented by a screen printing technique and a gravure printing technique. Of these, coating by slit coating is preferable for the polyimide precursor composition. The coating thickness should be appropriately adjusted according to the desired thickness of the resin film and the content of the polyimide precursor in the composition, and is preferably about 1 to 1,000 μm. The temperature in the coating step may be room temperature, and the polyimide precursor composition may be heated, for example, to 40 to 80°C so as to lower the viscosity and improve the workability.

<Optional Drying Step>

A drying step may be performed after the coating step, or the drying step may be omitted and the coating step may directly proceed to the subsequent film forming step (heating step). The drying step can be performed for the purpose of removing the organic solvent in the polyimide precursor composition. When performing the drying step, for example, it is possible to use appropriate devices such as a hot plate, a box dryer, and a conveyor dryer. The temperature of the drying step is preferably 80 to 200°C, and more preferably 100 to 150°C. The implementation time of the drying step is preferably 1 minute to 10 hours, and more preferably 3 minutes to 1 hour. As in the manner mentioned above, a coating film containing the polyimide precursor is formed on the support.

<Film Forming Step>

Subsequently, a film forming step (heating step) is performed. The heating step is a step of removing the organic solvent contained in the coating film and proceeding the imidization reaction of the polyimide precursor in the coating film to obtain a polyimide resin film. This heating step can be performed using apparatuses such as an inert gas oven, a hot plate, a box dryer, and a conveyor dryer. This step may be performed simultaneously with the drying step, or both steps may be performed sequentially.

The heating step may be performed in an air atmosphere, but is preferably performed in an inert gas atmosphere from the viewpoint of safety, satisfactory transparency, low thickness direction retardation (Rth), and low YI value of the polyimide film thus obtained. Examples of the inert gas include nitrogen and argon. The heating temperature may be appropriately set depending on the type of the polyimide precursor and the type of the solvent, but is preferably 250 to 550°C, and more preferably 300 to 450°C. If the temperature is 250°C or higher, the imidization reaction satisfactorily proceeds, and if the temperature is 550°C or lower, it is possible to avoid problems such as degradation of transparency of the obtained polyimide film and degradation of heat resistance. The heating time is preferably about 0.1 to 10 hours.

The oxygen concentration of the ambient atmosphere in the heating step is preferably 2,000 ppm by weight or less, more preferably 100 ppm by weight or less, and still more preferably 10 ppm by weight or less, from the viewpoint of the transparency and YI value of the obtained polyimide film. By heating in an atmosphere having an oxygen concentration of 2,000 ppm by weight or less, the YI value of the obtained polyimide film can be adjusted to 30 or less.

<Stripping Step>

In the stripping step, the polyimide resin film on the support is stripped, for example, after being cooled to about room temperature (25°C) to 50°C Examples of this stripping step include the following aspects (1) to (4).

(1) A method in which a structure comprising a polyimide resin film/support by the above method is fabricated and then the structure is irradiated with a laser from the support side of the structure to perform ablation processing of the interface between the support and the polyimide resin film, thereby stripping off the polyimide resin. The type of the laser includes a solid (YAG) laser, a gas (UV excimer) laser, etc. It is preferable to use a spectrum with a wavelength of 308 nm (see, for example, JP 2007-512568 W and JP 2012-511173 W).
(2) A method in which a stripping layer is formed before coating a support with a polyimide precursor composition, and then a structure comprising a polyimide resin film/stripping layer/support is obtained and the polyimide resin film is stripped. Examples of the stripping layer include a layer of Parylene (registered trademark, manufactured by Parylene Japan K.K.) or tungsten oxide, and releasing agents such as a vegetable oil-based, silicone-based, fluorine-based, and alkyd-based releasing agent may be used (see, for example, JP 2010-067957 A and JP 2013-179306 A). This method (2) may be used in combination with laser irradiation of the method (1).
(3) A method in which a structure comprising a polyimide resin film/support is obtained using a metal substrate which can be etched as a support, followed by etching the metal with an etchant to obtain the polyimide resin film. It is possible to use, as the metal, for example, copper (as a specific example, an electrolytic copper foil "DFF" manufactured by Mitsui Mining & Smelting Co., Ltd.) and aluminum. As the etchant, ferric chloride, etc. can be used for copper, and dilute hydrochloric acid, etc. can be used for aluminum.
(4) A method in which a structure comprising a polyimide resin film/support is obtained by the above method, and then an adhesive film is attached on a surface of the polyimide resin film, followed by separation of the adhesive film/the polyimide resin film from the support and further separation of the adhesive film from the polyimide resin film.

Of these stripping methods, the method (1) or (2) is preferable from the viewpoint of the refractive index difference between the front and back of the obtained polyimide resin film, the YI value, and the elongation. It is more preferable to perform the method (1), i.e., the irradiation step of irradiating the laser from the support side prior to the stripping step, from the viewpoint of the refractive index difference between the front and back of the polyimide resin film obtained. In the method (3), when copper is used as the support, the YI value of the obtained polyimide resin film becomes large and the elongation tends to be small. This is considered to be due to the effect of copper ions.
The thickness of the thus obtained polyimide film is not limited, but is preferably 1 to 200 μm, and more preferably 5 to 100 μm.

<Yellowness Index (YI Value)>

The YI value for a 10 μm thickness film of the polyimide film obtained from the polyimide precursor composition is preferably 20 or less, more preferably 18 or less, still more preferably 16 or less, particularly preferably 14 or less, particularly preferably 13 or less, particularly preferably 10 or less, and particularly preferably 7 or less, from the viewpoint of obtaining satisfactory optical properties. Moreover, the YI value varies depending on a monomer backbone of the polyimide precursor. If the monomer backbones each are identical, the larger the weight-average molecular weight of the polyimide precursor is, the smaller the YI value tends to be.
The YI value is influenced by, for example, the amine value of the silicon-containing compound to be used. When the amine value is high, the YI value tends to be large, and when the amine value is low, the YI value tends to be low. However, the polyimide precursor synthesized using the purified silicon-containing compound tends to exhibit lower YI value of the obtained polyimide resin film as compared with the polyimide precursor synthesized using the unpurified silicon-containing compound having the same amine value. Although the mechanism is unclear, the present inventors estimate as follows. Namely, in a conventional purification method, the non-cyclic low molecular weight diamine used in the production of the polyimide precursor remains and is decomposed during curing of the polyimide to generate radicals, thus causing an increase (degradation) in YI value. It is considered that reduction of the total amount of the cyclic siloxane represented by the general formula (2) enables not only removal of the cyclic siloxane represented by the general formula (2) during purification, but also removal of the low molecular weight diamine, which is easy to volatilize, among diamine components which increase the amine value. Therefore, it is estimated that the YI value of the polyimide precursor in which the total amount of the compound represented by the general formula (2) is reduced according to the present embodiment is further improved. Since it is difficult to reduce the non-cyclic diamine having a low molecular weight by a conventional purification method, it is considered that the degree of improvement in YI value of the polyimide resin film is smaller than that of the present embodiment even if the purification is performed.
In the present embodiment, the difference in YI value between the polyimide precursor using the purified silicon-containing compound and the polyimide precursor using the unpurified silicon-containing compound is determined by the following formula.

(Difference in YI value) = (YI value of polyimide resin film obtained by curing polyimide precursor which is obtained using unpurified silicon compound) - (YI value of polyimide precursor obtained by curing polyimide precursor which is obtained using purified silicon compound)

A larger difference in YI value indicates a greater improvement in YI, which is preferable. In the present embodiment, the difference in YI value is preferably 1.5 or greater, more preferably 2 or greater, and still more preferably 2.5 or greater. Please refer to Examples section for the measurement method of the YI value.

<<Applications of Polyimide Film>>

The polyimide film obtained from the polyimide precursor composition can be applied to, for example, a semiconductor dielectric film, a thin film transistor liquid crystal display (TFT-LCD) insulating film, and an electrode protective film, and additionally to transparent substrates, etc. of display devices such as a liquid crystal display, an organic electroluminescent display, a field emission display, and an electronic paper. The polyimide film obtained from the polyimide precursor composition can be suitably used as a thin film transistor (TFT) substrate, a color filter substrate, a touch panel substrate, and a substrate of a transparent conductive film (indium thin oxide (ITO)) in the production of flexible devices. Examples of the flexible device to which the polyimide film can be applied include a TFT device for flexible displays, a flexible solar cell, a flexible touch panel, a flexible illumination, a flexible battery, a flexible printed circuit, a flexible color filter, and a surface cover lens for smartphones.

The step of forming a TFT on a flexible substrate using the polyimide film is typically performed at a temperature in a wide range of 150 to 650°C Specifically, when producing a TFT device using amorphous silicon, a process temperature of 250 to 350°C is commonly required, and the polyimide film obtained from the composition of the present embodiment needs to withstand the temperature thereof. Specifically, it is necessary to appropriately select a polymer structure having a glass transition temperature and a thermal decomposition temperature higher than the process temperature.

When fabricating a TFT device using a metal oxide semiconductor (IGZO, etc.), a process temperature of 320 to 400°C is commonly required, and the polyimide film of the present embodiment needs to withstand the temperature thereof. Therefore, it is necessary to appropriately select a polymer structure having a glass transition temperature and a thermal decomposition temperature higher than the maximum temperature in the TFT fabricating process.

When fabricating a TFT device using low temperature polysilicon (LTPS), a process temperature of 380 to 520°C is commonly required, and the polyimide film obtained from the composition of the present embodiment needs to withstand the temperature thereof. Thus, it is necessary to appropriately select a glass transition temperature and thermal decomposition temperature higher than the maximum temperature in the TFT fabricating process. Meanwhile, due to these thermal histories, the optical properties (in particular, light transmittance, retardation property, and YI value) of the polyimide film tend to be degraded as they are exposed to elevated temperature processes. However, the polyimide obtained from the polyimide precursor of the present embodiment has favorable optical properties even after such heat histories.

Hereinafter, methods for producing a display and a laminate will be described as application examples of the polyimide film of the present embodiment.

<Production Method of Display>

The method for producing a display in the present embodiment includes: a coating step of coating a surface of a support with a polyimide precursor composition; a film forming step of forming a polyimide resin film by heating the polyimide precursor composition; an element forming step of forming an element on the polyimide resin film, and a stripping step of stripping the polyimide resin film on which the element is formed from the support.

Production Examples of Flexible Organic EL Display

FIG. 1 is a schematic diagram illustrating the structure of a top-emission flexible organic EL display, which is the upper portion of a polyimide substrate, as an example of the display. An organic EL structure unit 25 of FIG. 1 will be described. For example, a red light emitting organic EL element 250a, a green light emitting organic EL element

250b, and a blue light emitting organic EL element 250c are arranged in the matrix as one unit, and the light emitting area of each organic EL element is separated by each partition wall 251 (bank). Each organic EL element consists of a lower electrode (anode) 252, a hole transport layer 253, a light emitting layer 254, and an upper electrode (cathode) 255. On a lower layer 2a which is a CVD multilayer film (multi-barrier layer) made of silicon nitride (SiN) and/or silicon oxide (SiO), TFT 256 (selected from low temperature polysilicon (LTPS) or a metal oxide semiconductor (such as IGZO)) for driving the organic EL elements, an interlayer dielectric film 258 provided with a contact hole 257, and a plurality of lower electrodes 259, are disposed. The organic EL elements are sealed by a sealing substrate 2b, and a hollow portion 261 is formed between each organic EL element and the sealing substrate 2b.

The step of producing a flexible organic EL display includes a step of fabricating the polyimide film on a glass substrate support to produce the organic EL substrate shown in FIG. 1 above the film, a step of producing the sealing substrate, an assembling step of combining and attaching the both substrates, and a stripping step of stripping the organic EL display fabricated on the polyimide film from the glass substrate support. Known producing steps can be applied to the organic EL substrate producing step, the sealing substrate producing step, and the assembling step. The examples thereof are given below without being limited thereto. Note that the stripping step is the same as the stripping step of the polyimide film as mentioned above.

For example, as referred to FIG. 1, the polyimide film is first prepared on the glass substrate support by the above method, and the multi-barrier layer (lower substrate 2a in FIG. 1) consisting of a multilayer structure of silicon nitride (SiN) and silicon oxide (SiO) is fabricated thereon by a CVD method or sputtering method, followed by fabrication of the metal wiring layer for driving a TFT thereon using a photoresist, etc. An active buffer layer of SiO, etc. is fabricated thereon by the CVD method, and a TFT device (TFT 256 in FIG. 1) such as a metal oxide semiconductor (IGZO) or low temperature polysilicon (LTPS) is fabricated thereon. After fabricating a TFT substrate for the flexible display, the interlayer dielectric film 258 provided with contact holes 257 is formed using a photosensitive acrylic resin, etc. An ITO film is formed by sputtering, etc. and the lower electrode 259 is formed so as to be a counterpart of the TFT.

Next, after each partition (bank) 251 is formed by a photosensitive polyimide, etc. the hole transport layer 253 and the light emitting layer 254 are formed in each space separated by the partition. Further, the upper electrode (cathode) 255 is formed so as to cover the light emitting layer 254 and the partitions (banks) 251. Thereafter, using a fine metal mask, etc. as a mask, the organic EL substrate is fabricated by a known method by depositing an organic EL material (corresponding to the red light emitting organic EL element 250a in FIG. 1) which emits red light, an organic EL material (corresponding to the green light emitting organic EL element 250b in FIG. 1) which emits green light, and an organic EL material (corresponding to the blue light emitting organic EL element 250c in FIG. 1) which emits blue light. The organic EL substrate is sealed with a sealing film, etc. (sealing substrate 2b in FIG. 1), and the device above the polyimide substrate is stripped from the glass substrate support by a known stripping method such as laser stripping to fabricate a top-emission flexible organic EL display. When the polyimide of the present embodiment is used, a see-through flexible organic EL display can be fabricated. Further, a bottom-emission flexible organic EL display may be fabricated by a known method.

Production Examples of Flexible Liquid Crystal Display

A flexible liquid crystal display can be fabricated using the polyimide film. As a specific fabricating method, a polyimide film is fabricated on a glass substrate support by the above method, and a TFT substrate consisting of, for example, amorphous silicon, a metal oxide semiconductor (IGZO, etc.), and a low temperature polysilicon is fabricated by applying the above method. Separately, according to the coating and the film forming steps, a polyimide film is fabricated on a glass substrate support, and a color filter glass substrate (CF substrate) provided with the polyimide film is fabricated using a color resist, etc. according to a known method. To either the TFT substrate or the CF substrate, a surface of a frame-like pattern without the portion of the liquid crystal injection port is coated with a sealing material consisting of a thermosetting epoxy resin, etc. by screen printing, and to the other substrate, spherical spacers having a diameter equivalent to the thickness of the liquid crystal layer and consisting of a plastic material or silica, are scattered.

Then, the TFT substrate and the CF substrate are combined and attached together, and the sealing material is cured. Thereafter, a liquid crystal material is injected into the space surrounded by the TFT substrate and the CF substrate, as well as the sealing material by an evacuation method, the surface of the liquid crystal injection port is coated with a thermosetting resin, and the liquid crystal material is sealed with heating to form a liquid crystal layer. Finally, the flexible liquid crystal display can be fabricated by stripping the glass substrate on the CF side and the glass substrate on the TFT side, respectively at the interface between the polyimide film and the glass substrate by a laser stripping method, etc.

<Production Method of Laminate>

The method for producing a laminate includes: a coating step of coating a surface of a support with the polyimide

precursor composition; a film forming step of forming a polyimide resin film by heating the polyimide precursor composition, and an element forming step of forming an element on the polyimide resin film.

Examples of an element in the laminate include elements illustrated in the production of the above flexible device. For example, a glass substrate can be used as a support. Preferred specific procedures of the coating step and the film forming step are the same as those in the production method of the polyimide film mentioned above. Also, in the element forming step, the element is formed on a polyimide resin film as a flexible substrate, formed on the support. Thereafter, the polyimide resin film and the element may be optionally stripped from the support in the stripping step.

EXAMPLES

The embodiments of the present invention will be specifically described below by way of Examples and Comparative Examples, but the present invention is not limited to these Examples and Comparative Examples.

<<Measurement and Evaluation Method>>

<Weight-Average Molecular Weight>

The weight-average molecular weight (Mw) and the number-average molecular weight (Mn) were measured by gel permeation chromatography (GPC) under the following conditions. As a solvent, NMP (for high performance liquid chromatograph, manufactured by Wako Pure Chemical Industries, Ltd., with 24.8 mmol/L of lithium bromide monohydrate (manufactured by Wako Pure Chemical Industries, Ltd., purity: 99.5%) and 63.2 mmol/L of phosphoric acid (for high performance liquid chromatograph, manufactured by Wako Pure Chemical Industries, Ltd.), being added to and dissolved in NMP immediately before measurement) was used. A calibration curve for calculating the weight-average molecular weight was prepared using standard polystyrenes (manufactured by Tosoh Corporation).
Column: Shodex KD-806M (manufactured by Showa Denko K.K.)
Flow rate: 1.0 mL/minute
Column temperature: 40°C
Pump: PU-2080Plus (manufactured by JASCO Corporation)
Detector: RI-2031Plus (RI: differential refractometer, manufactured by JASCO Corporation) and UV-2075Plus (UV-VIS: ultraviolet-visible spectrophotometer, manufactured by JASCO Corporation).

<Analysis of Concentration of Low Molecular Weight Cyclic Siloxane>

The concentration analysis of the low molecular weight cyclic siloxanes of the general formulas (2) and (3) contained in the composition including silicon-containing compounds (general formulas (1), (2), and (3)) was performed by GC (gas chromatography) as mentioned below.

(Outlines)

The concentration analysis of the low molecular weight cyclic siloxane was performed by GC using a solution of a silicon-containing compound (having general formulas (1), (2), and (3)) dissolved in acetone (containing n-tetradecane as an internal standard substance). The concentration of each compound was determined from the peak area of each compound according to the method mentioned below based on the peak area of n-tetradecane.

GC measurement was performed using the following apparatus.
GC system: 7890A (Agilent Technology)
Column: J&W Scientific Durabond DB-5MS (MEGABORE: inner diameter: 0.53 mm, length: 30 m, liquid phase thickness: 1.0 μm)

GC measurements were performed under the following measurement conditions for all the measurements.
Column temperature: 50°C, raised at a heating rate of 10°C/minute and held at 280°C for 17 minutes (total duration time of 40 minutes).
Inlet temperature: 270°C
Carrier gas: He
Injection method: Split method (split ratio 1/10)
Detector: FID (300°C)

(Calculation of Amount of Low Molecular Weight Cyclic Siloxane)

The amount of the low molecular weight cyclic siloxane of the general formula (2) was calculated according to

the following formula:

$$Dm\phi\ (\mu m/g) = \{\text{total amount } (\mu g) \text{ of compound of the general formula (2)}\}/\{\text{total weight (g) of compounds of the general formulas (2-2) and (3)}\} = \{Dm\phi\ (\text{GC-Area})\}/\{\text{n-tetradecane (GC-Area)} \times \text{GC-Area Factor}\} \times 20 \times 100$$

where m corresponds to the number of carbon atoms (m) of the general formula (2) and m is an integer of 3 or greater. GC-Area Factor in the formula was calculated according to the following formula:

$$\text{GC-Area Factor} = \text{molecular weight/number of carbon atoms.}$$

The amount of the low molecular weight cyclic siloxane of the general formula (3) was calculated according to the following formula:

$$Dn\ (\mu g/g) = \{\text{total amount } (\mu g) \text{ of compound of the general formula (3)}\}/\{\text{total weight (g) of compounds of the general formulas (2-2) and (3)}\} = \{Dn\ (\text{GC-Area})\}/\{\text{n-tetradecane (GC-Area)} \times \text{GC-Area Factor}\} \times 20 \times 100$$

where n corresponds to the number of carbon atoms (n) of the general formula (3) and n is an integer of 3 or greater. GC-Area Factor in the formula was calculated according to the following formula:

$$\text{GC-Area Factor} = \text{molecular weight/number of carbon atoms.}$$

The apparatus used and the retention time (minutes) of each cyclic siloxane in GC measurement using the above measurement conditions are as shown in Table 1 below. The same applies to the subsequent GC measurements.

[Table 1]

| Compound name | Retention time (minutes) |
|---|---|
| D3 | 3.8 |
| D4 | 6.1 |
| D5 | 8.4 |
| D6 | 10.7 |
| D7 | 12.8 |
| D8 | 14.6 |
| D3φ | 16.4 |
| D4φ | 17.4 |
| D5φ | 18.6 |
| Tetradecane | 12.2 |

Dn (n = 3 to 8) in Table 1 is the cyclic siloxane corresponding to n in the general formula (3). Dmϕ (m = 3 to 5) in Table 1 is the cyclic siloxane corresponding to m in the general formula (2).

(Analysis of Concentration of Low Molecular Weight Cyclic Siloxane)

The concentration analysis of the low molecular weight cyclic siloxanes of general formulas (2) and (3) contained in the silicon-containing compound was performed by the following procedure. The silicon-containing compound (0.1 g)

was dissolved in 10 mL of acetone (containing 20 μg/mL of n-tetradecane as an internal standard substance) and the mixture was allowed to stand for 16 hours. 1 μL of the solution allowed to stand was weighed with a microsyringe and injected into the GC apparatus for measurement. In the thus obtained chromatogram, the peak area of each low molecular weight cyclic siloxane and n-tetradecane were calculated using the software installed in GC, and each concentration of the low molecular weight cyclic siloxanes was determined by the above calculation formula.

<Evaluation of Foreign Material Count of Polyimide Resin Film>

In this evaluation, in the case of drying and curing a large amount of the polyimide precursor using an oven to produce a polyimide resin film in the same oven, the amount of the foreign material adhered on the surface of the polyimide resin film was evaluated. A surface of a 200 mm square alkali-free glass substrate (hereinafter also referred to as glass substrate) was coated with each of the resin compositions of Examples and Comparative Examples to form a cured film having a film thickness of 10 μm. A slit coater (TN25000, manufactured by Tokyo Ohka Kogyo Co., Ltd.) was used for the coating. At this time, one type of the resin composition was formed on 50 of the glass substrates. One of the glass substrate having the coating film of the polyimide precursor composition was dried in an oven (KLO-30NH, manufactured by Koyo Thermo Systems Co., Ltd.) in a nitrogen atmosphere (oxygen concentration of 300 ppm or less) at 100°C for 30 minutes to remove the solvent. Subsequently, a polyimide resin film was formed on the glass substrate by heating at 350°C for 1 hour in a nitrogen atmosphere (oxygen concentration of 300 ppm or less). The size and number of the foreign material were counted using a microscope (VHX-6000, manufactured by Keyence Corporation) in the 50 mm square center area of the polyimide resin film obtained in the 200 mm square thereof. The observation conditions are as follows.
Lens: Magnification of 100 times
Threshold: Auto

The number of foreign material having a major axis of 50 μm or greater and less than 1,000 μm was evaluated and rated according to the following criteria. The number of foreign material is 10 or greater and less than 50: A (Good) The number of foreign material is 50 or greater and less than 100: B (Fair) The number of foreign material is 100 or greater: C (Fail)

The observed foreign material was subjected to EDS analysis (elemental analysis) using a scanning electron microscope (JSM-IT500HR, manufactured by JEOL, Ltd.). As a result, C, Si, O elements, etc. were observed and N element was not observed. From this result, it is estimated that, regarding the foreign material, the low molecular weight cyclic siloxane volatilized during vacuum drying adheres to the inner wall of the drying device, and then falls and adheres again. It is noted that when different types of the polyimide precursor compositions are evaluated, the evaluation was performed after the oven had been subjected to baking treatment without samples at 600°C for 5 hours or longer.

<Evaluation of Difference in YI Value>

In this evaluation, a polyimide precursor obtained using a purified silicon compound and a polyimide precursor obtained using an unpurified silicon compound were respectively cured to obtain polyimide resin films, and then the difference in YI value of the polyimide resin films was evaluated.

A surface of a 200 mm square alkali-free glass substrate (hereinafter, also referred to as a glass substrate) was coated with each of the polyimide precursor compositions of Examples and Comparative Examples to form a coating film with a film thickness of 10 μm after curing. A slit coater (TN25000, manufactured by Tokyo Ohka Kogyo Co., Ltd.) was used for the coating. Then, the solvent was removed by drying in an oven (KLO-30NH, manufactured by Koyo Thermo Systems Co., Ltd.) in a nitrogen atmosphere (oxygen concentration of 300 ppm or less) at 100°C for 30 minutes. Subsequently, heating was performed at 400°C for 1 hour in a nitrogen atmosphere (oxygen concentration of 300 ppm or less) to form the polyimide resin film on the glass substrate.

Using the polyimide resin film thus obtained, the YI value was measured using a spectrophotometer (SE600) manufactured by Nippon Denshoku Industries Co., Ltd. A D65 light source was used as a light source. The difference in YI value was obtained from the following formula.

(Difference in YI value) = (YI value of polyimide resin film obtained by curing polyimide precursor which is obtained using unpurified silicon compound) - (YI value of polyimide precursor obtained by curing polyimide precursor which is obtained using purified silicon compound)

In determining the difference in YI value, curing of the polyimide precursor obtained using the unpurified silicon compound and curing of the polyimide precursor obtained using the purified silicon compound were performed by a heat treatment in the same oven batch, thereby eliminating a device error.

<<Purification Method of Silicon-Containing Compound>>

The silicon-containing compounds mentioned in the Examples and Comparative Examples mentioned below were subjected to the following purification treatment to reduce the low molecular weight cyclic siloxane contained. The concentration of the low molecular weight cyclic siloxanes after purification was analyzed according to the above method.

<Purification A>

10 kg of the silicon-containing compound was charged in a flask, and stripping was performed while blowing nitrogen gas at a temperature of 160°C under a pressure of 270 Pa for 8 hours.

<Purification B-1>

1 kg of the silicon-containing compound was charged in a flask, and stripping was performed while blowing nitrogen gas at a temperature of 200°C under a pressure of 200 Pa for 8 hours.

<Purification B-2>

10 kg of the silicon-containing compound was charged in a flask, and stripping was performed while blowing nitrogen gas at a temperature of 200°C under a pressure of 200 Pa for 8 hours.

<Purification C> Purification treatment in accordance with Synthesis Example of the both-end amino-modified silicone oil (purified product) mentioned in JP 2016-029126 A

In 100 g of the silicon-containing compound, 1,000 g of acetone was added, followed by stirring at room temperature for 30 minutes. After centrifugation at 2,500 rpm for 15 minutes using a centrifuge, acetone and silicone oil were separated, followed by decantation to remove acetone. After repeating this operation three times, acetone was distilled off with an evaporator to obtain a purified silicon-containing compound.

<Purification D> Purification treatment in accordance with Purification Example 1 mentioned in JP 2006-028533 A

500 g of the silicon-containing compound was charged in a flask, and stripping was performed while blowing nitrogen gas at a temperature of 250°C under a pressure of 1,330 Pa for 8 hours.

<Purification E> Purification treatment in accordance with Purification Example 2 mentioned in JP 2006-028533 A

100 g of the silicon-containing compound was added in 300 g of 2-butanone and uniformly dissolved. This solution was slowly added into methanol while stirring to perform reprecipitation. The reprecipitation was repeated three times in total, followed by drying to obtain a purified silicon-containing compound.

<<Example 1>>

As shown in Table 2, the silicon-containing compound (1) (the compound having a number-average molecular weight of 4,400 of the general formula (1) in which $L_1$ and $L_2$ are an amino group, $R_1$ is $-CH_2CH_2CH_2-$, $R_2$, $R_3$, $R_6$, and $R_7$ are a methyl group, $R_4$ and $R_5$ are a phenyl group, and j/(i + j + k) = 0.15) was purified by the method of purification B. While introducing nitrogen gas into a 3 L separable flask equipped with a stirring bar, NMP (332 g) as a solvent, 4,4'-DAS (14.2 g) as a diamine, TFMB (37.8 g), and a purified silicon-containing compound (10.56 g) were added while stirring, and then PMDA (21.8 g) as an acid dianhydride was added. The molar ratio of the acid dianhydride to the diamine was 100:97. The mixture was stirred at room temperature for 48 hours to obtain a transparent NMP solution of polyamic acid (hereinafter also referred to as varnish). The varnish thus obtained was stored in a freezer (set at - 20°C, the same applies hereinafter) and was thawed when used for evaluation.

<<Examples 2 to 32>>

The same procedure as in Example 1 was performed, except that the types and amounts of the solvent, the acid dianhydride, the diamine, and the silicon-containing compound in Example 1 were changed to those mentioned in Table 2.

The silicon-containing compounds in Table 2 are as follows.

Silicon-containing compound (2): The compound having a number-average molecular weight of 1,340 of the general formula (1) in which $L_1$ and $L_2$ are an amino group, $R_1$ is $-CH_2CH_2CH_2-$, $R_2$, $R_3$, $R_6$, and $R_7$ are a methyl group, $R_4$ and $R_5$ are a phenyl group, and $j/(i + j + k) = 0.15$ Silicon-containing compound (3): The compound having a number-average molecular weight of 4,200 of the general formula (1) in which $L_1$ and $L_2$ are an anhydride group, $R_1$ is $- CH_2CH_2CH_2-$, $R_2$, $R_3$, $R_6$, and $R_7$ are a methyl group, $R_4$ and $R_5$ are a phenyl group, and $j/(i + j + k) = 0.15$

Silicon-containing compound (4): The compound having a number-average molecular weight of 1,240 of the general formula (1) in which $L_1$ and $L_2$ are an epoxy group, $R_1$ is $-CH_2CH_2CH_2-$, $R_2$, $R_3$, $R_6$, and $R_7$ are a methyl group, $R_4$ and $R_5$ are a phenyl group, and $j/(i + j + k) = 0.15$

<<Comparative Example 1>>

As shown in Table 3, while introducing nitrogen gas into a 3 L separable flask equipped with a stirring bar, NMP (319 g) as a solvent, 4,4'-DAS (14.3 g) as a diamine, TFMB (12.3 g), the unpurified silicon-containing compound (1) (the compound having a number-average molecular weight of 4,400 of the general formula (1) in which $L_1$ and $L_2$ are an amino group, $R_1$ is $-CH_2CH_2CH_2-$, $R_2$, $R_3$, $R_6$, and $R_7$ are a methyl group, $R_4$ and $R_5$ are a phenyl group, and $j/(i + j + k) = 0.15$) (5.72 g) were added while stirring, and then PMDA (15.3 g) as an acid dianhydride was added. The molar ratio of the acid dianhydride to the diamine was 100:97. Then, the mixture was stirred at room temperature for 48 hours to obtain a transparent NMP solution of polyamic acid (hereinafter also referred to as varnish). The varnish thus obtained was stored in a freezer (set at -20°C, the same applies hereinafter) and was thawed when used for evaluation.

<<Comparative Example 2 to Comparative Example 19>>

The same procedure as in Comparative Example 1 was performed, except that the types and amounts of the solvent, the acid dianhydride, the diamine, and the silicon-containing compound in Comparative Example 1 were changed to those mentioned in Table 3.

With respect to compositions including the silicon-containing compounds of Examples and Comparative Examples, the concentration of the low-molecular cyclic siloxane was measured, and the molecular weight of the polyimide precursor obtained from the composition, the foreign material count evaluation of the polyimide film obtained from the polyimide precursor, and the difference in YI value were evaluated. The results are shown in Tables 4 and 5. In Tables 4 and 5, the "compound of formula (2)" corresponds to the compound of general formula (2) in which m is 3 to 5, and the "compound of formula (3)" corresponds to the compound of the general formula (3) in which n is 3 to 8.

[Table 2]

| | Acid dianhydride 1 | | Acid dianhydride 2 | | Diamine 1 | | Diamine 2 | | Silicon-containing compound | | | Solvent | |
|---|---|---|---|---|---|---|---|---|---|---|---|---|---|
| | Type | Weight (g) | Type | Weight (g) | Type | Weight (g) | Type | Weight (g) | Type | Purification treatment | Weight (g) | Type | Weight (g) |
| Example 1 | PMDA | 21.8 | | | 4,4'-DAS | 14.1 | TFMB | 12.1 | (1) | Purification B-1 | 10.56 | NMP | 332 |
| Example 2 | | | BPDA | 29.4 | 4,4'-DAS | 14.1 | TFMB | 12.1 | (1) | Purification B-1 | 10.56 | NMP | 375 |
| Example 3 | PMDA | 15.3 | BPDA | 8.8 | 4,4'-DAS | 14.1 | TFMB | 12.1 | (1) | Purification A | 10.56 | NMP | 345 |
| Example 4 | PMDA | 15.3 | BPDA | 8.8 | 4,4'-DAS | 14.1 | TFMB | 12.1 | (1) | Purification B-2 | 10.56 | NMP | 345 |
| Example 5 | PMDA | 15.3 | BPDA | 8.8 | 4,4'-DAS | 14.2 | TFMB | 12.2 | (1) | Purification B-1 | 7.92 | NMP | 331 |
| Example 6 | PMDA | 15.3 | BPDA | 8.8 | 4,4'-DAS | 13.9 | TFMB | 11.9 | (1) | Purification B-1 | 16.72 | NMP | 378 |
| Example 7 | PMDA | 21.8 | | | | | TFMB | 30.3 | (1) | Purification B-1 | 10.56 | NMP | 355 |
| Example 8 | | | BPDA | 29.4 | | | TFMB | 30.3 | (1) | Purification B-1 | 10.56 | NMP | 398 |
| Example 9 | PMDA | 10.9 | BPDA | 14.7 | | | TFMB | 30.3 | (1) | Purification A | 10.56 | NMP | 377 |
| Example 10 | PMDA | 10.9 | BPDA | 14.7 | | | TFMB | 30.3 | (1) | Purification B-2 | 10.56 | NMP | 377 |
| Example 11 | PMDA | 10.9 | BPDA | 14.7 | | | TFMB | 30.5 | (1) | Purification B-1 | 8.36 | NMP | 365 |
| Example 12 | PMDA | 10.9 | BPDA | 14.7 | | | TFMB | 29.7 | (1) | Purification B-1 | 18.04 | NMP | 416 |
| Example 13 | PMDA | 21.8 | | | 4,4'-DAS | 23.5 | | | (1) | Purification B-1 | 10.56 | NMP | 317 |
| Example 14 | | | BPDA | 29.4 | 4,4'-DAS | 23.5 | | | (1) | Purification B-1 | 10.56 | NMP | 360 |
| Example 15 | PMDA | 10.9 | BPDA | 14.7 | 4,4'-DAS | 23.5 | | | (1) | Purification A | 10.56 | NMP | 338 |
| Example 16 | PMDA | 10.9 | BPDA | 14.7 | 4,4'-DAS | 23.5 | | | (1) | Purification B-2 | 10.56 | NMP | 338 |
| Example 17 | PMDA | 10.9 | BPDA | 14.7 | 4,4'-DAS | 23.6 | | | (1) | Purification B-1 | 7.92 | NMP | 324 |
| Example 18 | PMDA | 10.9 | BPDA | 14.7 | 4,4'-DAS | 23.1 | | | (1) | Purification B-1 | 16.72 | NMP | 371 |
| Example 19 | PMDA | 21.8 | | | mTB | 20.1 | | | (1) | Purification A | 10.56 | NMP | 297 |
| Example 20 | PMDA | 21.8 | | | mTB | 20.1 | | | (1) | Purification B-2 | 10.56 | NMP | 297 |
| Example 21 | PMDA | 31.0 | | | PDA | 5.1 | BAPP | 19.4 | (1) | Purification B-1 | 10.56 | NMP | 375 |
| Example 22 | PMDA | 31.0 | | | ODA | 18.9 | | | (1) | Purification B-1 | 10.56 | NMP | 343 |
| Example 23 | PMDAH | 22.4 | | | mTB | 20.1 | | | (1) | Purification B-1 | 10.56 | NMP | 301 |
| Example 24 | CBDA | 19.6 | | | TFMB | 20.1 | | | (1) | Purification B-1 | 10.56 | NMP | 285 |

(continued)

| | Acid dianhydride 1 | | Acid dianhydride 2 | | Diamine 1 | | Diamine 2 | | Silicon-containing compound | | | Solvent | |
|---|---|---|---|---|---|---|---|---|---|---|---|---|---|
| | Type | Weight (g) | Type | Weight (g) | Type | Weight (g) | Type | Weight (g) | Type | Purification treatment | Weight (g) | Type | Weight (g) |
| Example 25 | BPDA | 29.4 | | | CHDA | 10.8 | | | (1) | Purification B-1 | 10.56 | NMP | 288 |
| Example 26 | ODPA | 31.0 | | | | | TFMB | 30.3 | (1) | Purification B-1 | 10.56 | NMP | 407 |
| Example 27 | PMDA | 15.3 | BPDA | 8.8 | 3,3'-DAS | 14.1 | TFMB | 12.1 | (1) | Purification B-1 | 10.56 | NMP | 345 |
| Example 28 | PMDA | 15.3 | BPDA | 8.8 | 4,4'-DAS | 14.1 | TFMB | 12.1 | (1) | Purification B-1 | 10.56 | NMP/GBL | (172/172) |
| Example 29 | PMDA | 15.3 | BPDA | 8.8 | 4,4'-DAS | 14.1 | TFMB | 12.1 | (1) | Purification B-1 | 10.56 | NMP | 345 |
| Example 30 | PMDA | 15.3 | BPDA | 8.8 | 4,4'-DAS | 13.4 | TFMB | 11.5 | (2) | Purification B-1 | 9.65 | NMP | 332 |
| Example 31 | PMDA | 14.9 | BPDA | 8.6 | 4,4'-DAS | 14.5 | TFMB | 12.4 | (3) | Purification B-1 | 10.08 | NMP | 343 |
| Example 32 | PMDA | 15.3 | BPDA | 8.8 | 4,4'-DAS | 14.5 | TFMB | 12.4 | (4) | Purification B-1 | 10.04 | NMP | 346 |

[Table 3]

| | Acid dianhydride 1 | | Acid dianhydride 2 | | Diamine 1 | | Diamine 2 | | Silicon-containing compound | | | Solvent | |
|---|---|---|---|---|---|---|---|---|---|---|---|---|---|
| | Type | Weight (g) | Type | Weight (g) | Type | Weight (g) | Type | Weight (g) | Type | Purification treatment | Weight (g) | Type | Weight (g) |
| Comparative Example 1 | PMDA | 15.3 | BPDA | 8.8 | 4,4'-DAS | 14.3 | TFMB | 12.3 | (1) | Unpurified | 5.72 | NMP | 319 |
| Comparative Example 2 | PMDA | 15.3 | BPDA | 8.8 | 4,4'-DAS | 14.1 | TFMB | 12.1 | (1) | Unpurified | 10.56 | NMP | 345 |
| Comparative Example 3 | PMDA | 15.3 | BPDA | 8.8 | 4,4'-DAS | 13.9 | TFMB | 12.0 | (1) | Unpurified | 16.28 | NMP | 375 |
| Comparative Example 4 | PMDA | 10.9 | BPDA | 14.7 | | | TFMB | 30.6 | (1) | Unpurified | 6.60 | NMP | 356 |
| Comparative Example 5 | PMDA | 10.9 | BPDA | 14.7 | | | TFMB | 30.3 | (1) | Unpurified | 10.56 | NMP | 377 |
| Comparative Example 6 | PMDA | 10.9 | BPDA | 14.7 | | | TFMB | 29.7 | (1) | Unpurified | 18.04 | NMP | 416 |
| Comparative Example 7 | PMDA | 10.9 | BPDA | 14.7 | 4,4'-DAS | 23.8 | | | (1) | Unpurified | 5.72 | NMP | 312 |
| Comparative Example 8 | PMDA | 10.9 | BPDA | 14.7 | 4,4'-DAS | 23.5 | | | (1) | Unpurified | 10.56 | NMP | 338 |
| Comparative Example 9 | PMDA | 10.9 | BPDA | 14.7 | 4,4'-DAS | 23.2 | | | (1) | Unpurified | 15.84 | NMP | 366 |
| Comparative Example 10 | PMDA | 21.8 | | | mTB | 20.1 | | | (1) | Unpurified | 10.56 | NMP | 297 |
| Comparative Example 11 | PMDA | 31.0 | | | PDA | 5.1 | BAPP | 19.4 | (1) | Unpurified | 10.56 | NMP | 375 |
| Comparative Example 12 | PMDA | 31.0 | | | ODA | 18.9 | | | (1) | Unpurified | 10.56 | NMP | 343 |
| Comparative Example 13 | PMDAH | 22.4 | | | mTB | 20.1 | | | (1) | Unpurified | 10.56 | NMP | 301 |
| Comparative Example 14 | CBDA | 19.6 | | | TFMB | 20.1 | | | (1) | Unpurified | 10.56 | NMP | 285 |

(continued)

| | Acid dianhydride 1 | | Acid dianhydride 2 | | Diamine 1 | | Diamine 2 | | Silicon-containing compound | | | Solvent | |
|---|---|---|---|---|---|---|---|---|---|---|---|---|---|
| | Type | Weight (g) | Type | Weight (g) | Type | Weight (g) | Type | Weight (g) | Type | Purification treatment | Weight (g) | Type | Weight (g) |
| Comparative Example 15 | BPDA | 29.4 | | | CHDA | 10.8 | | | (1) | Unpurified | 10.56 | NMP | 288 |
| Comparative Example 16 | ODPA | 31.0 | | | | | TFMB | 30.3 | (1) | Unpurified | 10.56 | NMP | 407 |
| Comparative Example 17 | PMDA | 15.3 | BPDA | 8.8 | 4,4'-DAS | 14.1 | TFMB | 12.1 | (1) | Treatment C | 10.56 | NMP | 345 |
| Comparative Example 18 | PMDA | 15.3 | BPDA | 8.8 | 4,4'-DAS | 14.1 | TFMB | 12.1 | (1) | Treatment D | 10.56 | NMP | 345 |
| Comparative Example 19 | PMDA | 15.3 | BPDA | 8.8 | 4,4'-DAS | 14.1 | TFMB | 12.1 | (1) | Treatment E | 10.56 | NMP | 345 |

[Table 4]

| | Low molecular weight cyclic siloxane concentration [ppm] (based on silicon-containing compound) | | | | PI precursor molecular weight | Evaluation of foreign material count | Difference in YI value |
|---|---|---|---|---|---|---|---|
| | m = 3 compound | m = 4 compound | Formula (2) compound | Formula (2) + formula (3) compounds | | | |
| Example 1 | 2,781 | 1,021 | 4,493 | 5,246 | 115,000 | A | 2.6 |
| Example 2 | 2,781 | 1,021 | 4,493 | 5,246 | 93,000 | A | 2.8 |
| Example 3 | 18,356 | 9,869 | 33,128 | 34,327 | 104,000 | B | 1.6 |
| Example 4 | 6,551 | 2,387 | 9,806 | 10,826 | 103,000 | B | 2.2 |
| Example 5 | 2,781 | 1,021 | 4,493 | 5,246 | 96,000 | A | 2.7 |
| Example 6 | 2,781 | 1,021 | 4,493 | 5,246 | 113,000 | A | 2.5 |
| Example 7 | 1,558 | 561 | 2,516 | 2,682 | 92,000 | A | 2.8 |
| Example 8 | 1,558 | 561 | 2,516 | 2,682 | 72,000 | A | 2.9 |
| Example 9 | 24,886 | 14,829 | 45,876 | 46,819 | 81,000 | B | 1.9 |
| Example 10 | 6,551 | 2,387 | 9,806 | 10,826 | 83,000 | B | 2 |
| Example 11 | 1,558 | 561 | 2,516 | 2,682 | 68,000 | A | 3 |
| Example 12 | 1,558 | 561 | 2,516 | 2,682 | 88,000 | A | 2.6 |
| Example 13 | 2,314 | 864 | 3,674 | 4,175 | 103,000 | A | 2.8 |
| Example 14 | 2,314 | 864 | 3,674 | 4,175 | 74,000 | A | 2.9 |
| Example 15 | 18,356 | 9,869 | 33,128 | 34,327 | 85,000 | B | 1.6 |
| Example 16 | 4,497 | 1,826 | 7,173 | 9,316 | 83,000 | B | 2.1 |
| Example 17 | 2,314 | 864 | 3,674 | 4,175 | 79,000 | A | 2.9 |
| Example 18 | 2,314 | 864 | 3,674 | 4,175 | 96,000 | A | 2.5 |
| Example 19 | 24,886 | 14,829 | 45,876 | 46,819 | 94,000 | B | 1.6 |
| Example 20 | 4,497 | 1,826 | 7,173 | 9,316 | 93,000 | B | 2.2 |

(continued)

| | Low molecular weight cyclic siloxane concentration [ppm] (based on silicon-containing compound) | | | | PI precursor molecular weight | Evaluation of foreign material count | Difference in YI value |
|---|---|---|---|---|---|---|---|
| | m = 3 compound | m = 4 compound | Formula (2) compound | Formula (2) + formula (3) compounds | | | |
| Example 21 | 3,662 | 1,386 | 5,926 | 6,273 | 102,000 | A | 2.7 |
| Example 22 | 3,662 | 1,386 | 5,926 | 6,273 | 109,000 | A | 2.6 |
| Example 23 | 3,662 | 1,386 | 5,926 | 6,273 | 63,000 | A | 2.8 |
| Example 24 | 3,662 | 1,386 | 5,926 | 6,273 | 84,000 | A | 2.5 |
| Example 25 | 3,662 | 1,386 | 5,926 | 6,273 | 104,000 | A | 2.9 |
| Example 26 | 3,662 | 1,386 | 5,926 | 6,273 | 68,000 | A | 3 |
| Example 27 | 2,781 | 1,021 | 4,493 | 5,246 | 105,000 | A | 2.5 |
| Example 28 | 2,781 | 1,021 | 4,493 | 5,246 | 105,000 | A | 2.7 |
| Example 29 | 2,781 | 1,021 | 4,493 | 5,246 | 104,000 | A | 2.6 |
| Example 30 | 2,886 | 1,242 | 5,122 | 5,280 | 102,000 | A | 2.6 |
| Example 31 | 1,804 | 777 | 3,202 | 3,300 | 91,000 | A | 2.5 |
| Example 32 | 2,164 | 932 | 3,842 | 3,960 | 9,000 | A | 2.5 |

[Table 5]

| | Low molecular weight cyclic siloxane concentration [ppm] (based on silicon-containing compound) | | | | PI precursor molecular weight | Evaluation of foreign material count | Difference in YI value |
|---|---|---|---|---|---|---|---|
| | m = 3 compound | m = 4 compound | Formula (2) compound | Formula (2) + formula (3) compounds | | | |
| Comparative Example 1 | 31,524 | 22,272 | 55,726 | 68,326 | 104,000 | C | - |
| Comparative Example 2 | 31,524 | 22,272 | 55,726 | 68,326 | 105,000 | C | - |
| Comparative Example 3 | 31,524 | 22,272 | 55,726 | 68,326 | 103,000 | C | - |
| Comparative Example 4 | 31,524 | 22,272 | 55,726 | 68,326 | 64,000 | C | - |

(continued)

| | Low molecular weight cyclic siloxane concentration [ppm] (based on silicon-containing compound) | | | | PI precursor molecular weight | Evaluation of foreign material count | Difference in YI value |
|---|---|---|---|---|---|---|---|
| | m = 3 compound | m = 4 compound | Formula (2) compound | Formula (2) + formula (3) compounds | | | |
| Comparative Example 5 | 31,524 | 22,272 | 55,726 | 68,326 | 80,000 | C | - |
| Comparative Example 6 | 31,524 | 22,272 | 55,726 | 68,326 | 87,000 | C | - |
| Comparative Example 7 | 31,524 | 22,272 | 55,726 | 68,326 | 82,000 | C | - |
| Comparative Example 8 | 31,524 | 22,272 | 55,726 | 68,326 | 84,000 | C | - |
| Comparative Example 9 | 31,524 | 22,272 | 55,726 | 68,326 | 83,000 | C | - |
| Comparative Example 10 | 31,524 | 22,272 | 55,726 | 68,326 | 94,000 | C | - |
| Comparative Example 11 | 31,524 | 22,272 | 55,726 | 68,326 | 100,000 | C | - |
| Comparative Example 12 | 31,524 | 22,272 | 55,726 | 68,326 | 106,000 | C | - |
| Comparative Example 13 | 31,524 | 22,272 | 55,726 | 68,326 | 62,000 | C | - |
| Comparative Example 14 | 31,524 | 22,272 | 55,726 | 68,326 | 83,000 | C | - |
| Comparative Example 15 | 31,524 | 22,272 | 55,726 | 68,326 | 101,000 | C | - |
| Comparative Example 16 | 31,524 | 22,272 | 55,726 | 68,326 | 64,000 | C | - |
| Comparative Example 17 | 26,829 | 17,623 | 48,913 | 50,219 | 104,000 | C | 1 |
| Comparative Example 18 | 28,981 ' | 18,551 | 49,211 | 53,417 | 104,000 | C | 1.2 |
| Comparative Example 19 | 29,276 | 19,326 | 50,962 | 57,336 | 104,000 | c | 1.1 |

REFERENCE SIGNS LIST

2a: Lower substrate
2b: Sealing substrate
25: Organic EL structure unit
250a: Red light emitting organic EL element
250b: Green light emitting organic EL element
250c: Blue light emitting organic EL element
251: Partition wall (bank)
252: Lower electrode (anode)

253: Hole transport layer
254: Light emitting layer
255: Upper electrode (cathode)
256: TFT
257: Contact hole
258: Interlayer dielectric film
259: Lower electrode
261: Hollow portion

## Claims

**1.** A composition comprising a silicon-containing compound represented by the following general formula (1):

[Chemical Formula 1]

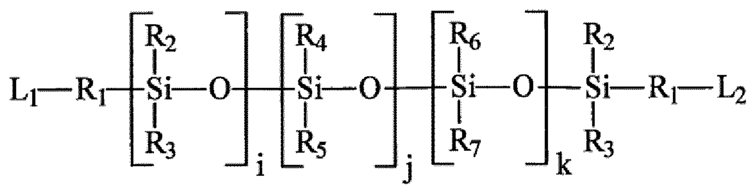

(1)

wherein a plurality of $R_1$ are each independently a single bond or a divalent organic group having 1 to 10 carbon atoms, $R_2$ and $R_3$ are each independently a monovalent organic group having 1 to 10 carbon atoms, at least one of which is a monovalent aliphatic hydrocarbon group having 1 to 5 carbon atoms, $R_4$ and $R_5$ are each independently a monovalent organic group having 1 to 10 carbon atoms, at least one of which is a monovalent aromatic group having 6 to 10 carbon atoms, $R_6$ and $R_7$ are each independently a monovalent organic group having 1 to 10 carbon atoms, at least one of which is an organic group having an unsaturated aliphatic hydrocarbon group, $L_1$ and $L_2$ are each independently an amino group, an anhydride group, an isocyanate group, a carboxyl group, an acid ester group, an acid halide group, a hydroxy group, an epoxy group, or a mercapto group, i and j are each independently an integer of 1 to 200, k is an integer of 0 to 200, and $0.05 \leq j/(i + j + k) \leq 0.50$;

at least one silicon-containing compound of the following general formula (2-1) or (2-2) in which m is an integer of 3 or greater:

[Chemical Formula 2]

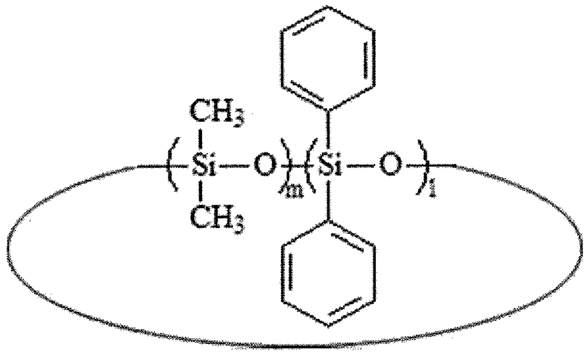

(2-1)

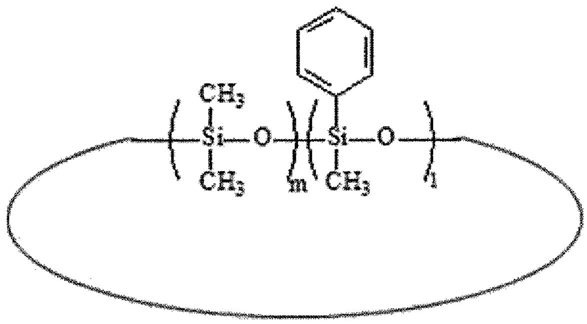

(2-2)

wherein m is an integer of 1 or greater; and
optionally, a silicon-containing compound represented by the following general formula (3):

[Chemical Formula 3]

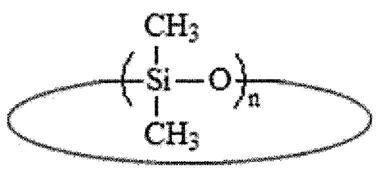

(3)

wherein n is an integer of 2 or greater; wherein
the total amount of the silicon-containing compound of the general formula (2-1) or (2-2) in which m is an integer of 3 or greater is more than 0 ppm and 46,000 ppm or less based on the total weight of the silicon-containing compounds of the general formulas (1), (2-1), (2-2), and (3), and
the composition is used for producing a polyimide precursor obtained by copolymerizing the silicon-containing compound, tetracarboxylic dianhydride, and diamine.

**2.** The composition according to claim 1, wherein the total amount of the silicon-containing compound of the general formula (2-1) or (2-2) in which m is an integer of 3 or greater is more than 0 ppm and 10,000 ppm or less based on the total weight of the silicon-containing compounds of the general formulas (1), (2-1), (2-2), and (3).

**3.** The composition according to claim 2, wherein the total amount of the silicon-containing compound of the general formula (2-1) or (2-2) in which m is an integer of 3 or greater is more than 0 ppm and 6,000 ppm or less based on the total weight of the silicon-containing compounds of the general formulas (1), (2-1), (2-2) and (3).

**4.** The composition according to any one of claims 1 to 3, wherein m is an integer of 3 to 5 in the silicon-containing compound represented by the general formula (2-1) or (2-2).

**5.** A composition comprising a silicon-containing compound represented by the following general formula (1):

[Chemical Formula 4]

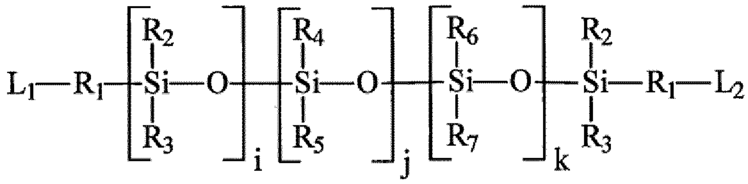

(1)

wherein a plurality of $R_1$ are each independently a single bond or a divalent organic group having 1 to 10 carbon atoms, $R_2$ and $R_3$ are each independently a monovalent organic group having 1 to 10 carbon atoms, at least one of which is a monovalent aliphatic hydrocarbon group having 1 to 5 carbon atoms, $R_4$ and $R_5$ are each independently a monovalent organic group having 1 to 10 carbon atoms, at least one of which is a monovalent aromatic group having 6 to 10 carbon atoms, $R_6$ and $R_7$ are each independently a monovalent organic group having 1 to 10 carbon atoms, at least one of which is an organic group having an unsaturated aliphatic hydrocarbon group, $L_1$ and $L_2$ are each independently an amino group, an anhydride group, an isocyanate group, a carboxyl group, an acid ester group, an acid halide group, a hydroxy group, an epoxy group, or a mercapto group, i and j are each independently an integer of 1 to 200, k is an integer of 0 to 200, and $0.05 \leq j/(i + j + k) \leq 0.50$;

at least one silicon-containing compound of the following general formula (2-1) or (2-2) in which m is 3:

[Chemical Formula 5]

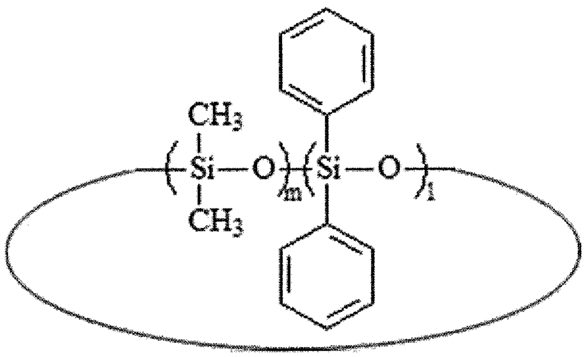

(2-1)

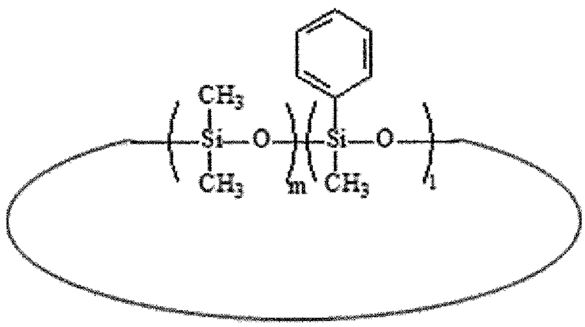

(2-2)

wherein m is an integer of 1 or greater; and
optionally, a silicon-containing compound represented by the following general formula (3):

[Chemical Formula 6]

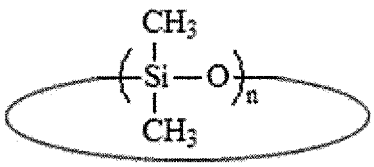

(3)

wherein n is an integer of 2 or greater; wherein
the total amount of the silicon-containing compound of the general formula (2-1) or (2-2) in which m is 3 is more than 0 ppm and 25,000 ppm or less based on the total weight of the silicon-containing compounds of the general formulas (1), (2-1), (2-2), and (3), and
the composition is used for producing a polyimide precursor obtained by copolymerizing the silicon-containing compound, tetracarboxylic dianhydride, and diamine.

**6.** The composition according to claim 5, wherein the total amount of the silicon-containing compound of the general formula (2-1) or (2-2) in which m is 3 is more than 0 ppm and 6,600 ppm or less based on the total weight of the silicon-containing compounds of the general formulas (1), (2-1), (2-2), and (3).

**7.** The composition according to claim 6, wherein the total amount of the silicon-containing compound of the general formula (2-1) or (2-2) in which m is 3 is more than 0 ppm and 3,700 ppm or less based on the total weight of the silicon-containing compounds of the general formulas (1), (2-1), (2-2), and (3).

**8.** A composition comprising a silicon-containing compound represented by the following general formula (1):

[Chemical Formula 7]

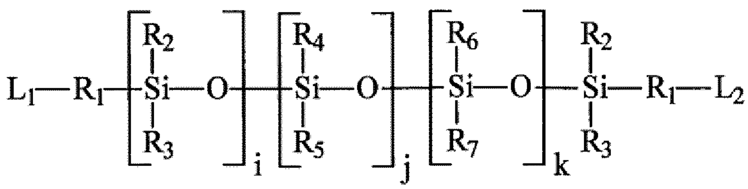

(1)

wherein a plurality of $R_1$ are each independently a single bond or a divalent organic group having 1 to 10 carbon atoms, $R_2$ and $R_3$ are each independently a monovalent organic group having 1 to 10 carbon atoms, at least one of which is a monovalent aliphatic hydrocarbon group having 1 to 5 carbon atoms, $R_4$ and $R_5$ are each independently a monovalent organic group having 1 to 10 carbon atoms, at least one of which is a monovalent aromatic group having 6 to 10 carbon atoms, $R_6$ and $R_7$ are each independently a monovalent organic group having 1 to 10 carbon atoms, at least one of which is an organic group having an unsaturated aliphatic hydrocarbon group, $L_1$ and $L_2$ are each independently an amino group, an anhydride group, an isocyanate group, a carboxyl group, an acid ester group, an acid halide group, a hydroxy group, an epoxy group, or a mercapto group, i and j are each independently an integer of 1 to 200, k is an integer of 0 to 200, and $0.05 \leq j/(i + j + k) \leq 0.50$;

at least one silicon-containing compound of the following general formula (2-1) or (2-2) in which m is 4:

[Chemical Formula 8]

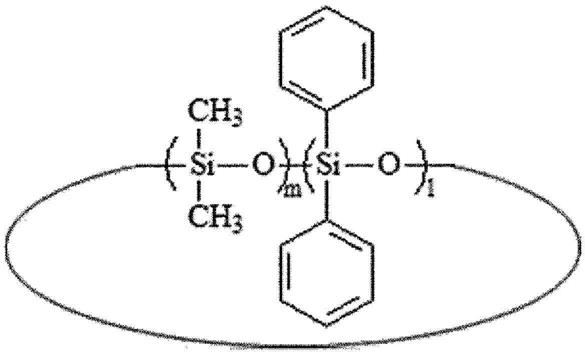

(2-1)

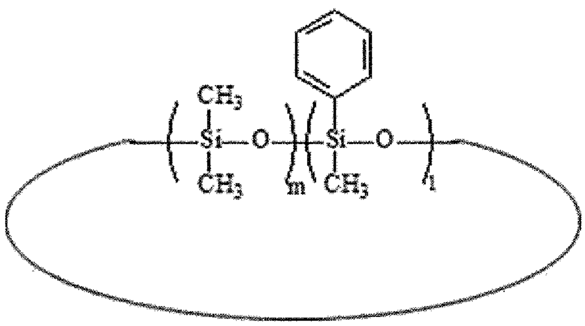

(2-2)

wherein m is an integer of 1 or greater; and
optionally, a silicon-containing compound represented by the following general formula (3):

[Chemical Formula 9]

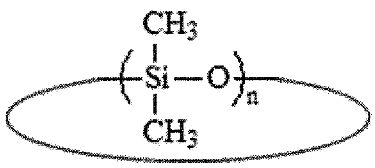

(3)

wherein n is an integer of 2 or greater; wherein
the total amount of the silicon-containing compound of the general formula (2-1) or (2-2) in which m is 4 is more than 0 ppm and 15,000 ppm or less based on the total weight of the silicon-containing compounds of the general formulas (1), (2-1), (2-2), and (3); and
the composition is used for producing a polyimide precursor obtained by copolymerizing the silicon-containing compound, tetracarboxylic dianhydride, and diamine.

**9.** The composition according to claim 8, wherein the total amount of the silicon-containing compound of the general formula (2-1) or (2-2) in which m is 4 is more than 0 ppm and 2,500 ppm or less based on the total weight of the silicon-containing compounds of the general formulas (1), (2-1), (2-2), and (3).

**10.** The composition according to claim 9, wherein the total amount of the silicon-containing compound of the general formula (2-1) or (2-2) in which m is 4 is more than 0 ppm and 1,400 ppm or less based on the total weight of the silicon-containing compounds of the general formulas (1), (2-1), (2-2), and (3).

**11.** A composition comprising a silicon-containing compound represented by the following general formula (1):

[Chemical Formula 10]

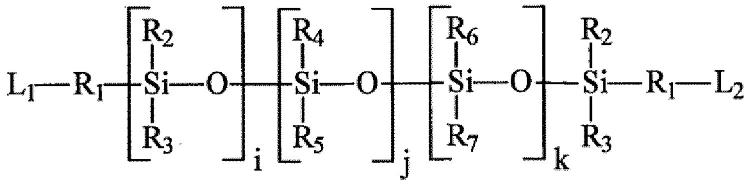

(1)

wherein a plurality of $R_1$ are each independently a single bond or a divalent organic group having 1 to 10 carbon atoms, $R_2$ and $R_3$ are each independently a monovalent organic group having 1 to 10 carbon atoms, at least one of which is a monovalent aliphatic hydrocarbon group having 1 to 5 carbon atoms, $R_4$ and $R_5$ are each independently a monovalent organic group having 1 to 10 carbon atoms, at least one of which is a monovalent aromatic group having 6 to 10 carbon atoms, $R_6$ and $R_7$ are each independently a monovalent organic group having 1 to 10 carbon atoms, at least one of which is an organic group having an unsaturated aliphatic hydrocarbon group, $L_1$ and $L_2$ are each independently an amino group, an anhydride group, an isocyanate group, a carboxyl group, an acid ester group, an acid halide group, a hydroxy group, an epoxy group, or a mercapto group, i and j are each independently an integer of 1 to 200, k is an integer of 0 to 200, and $0.05 \leq j/(i + j + k) \leq 0.50$;

at least one silicon-containing compound of the following general formula (2-1) or (2-2) in which m is an integer of 3 or greater:

[Chemical Formula 11]

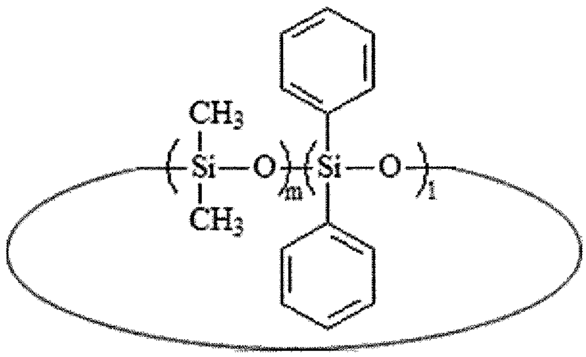

(2-1)

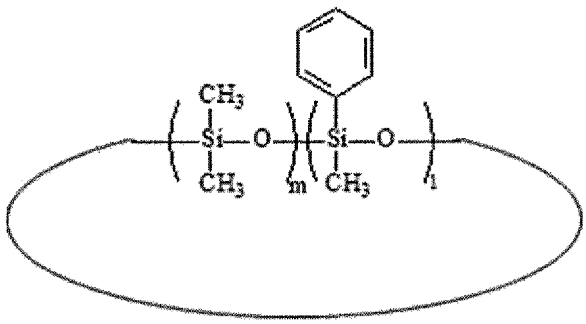

(2-2)

wherein m is an integer of 1 or greater; and

a silicon-containing compound represented by the following general formula (3):

[Chemical Formula 12]

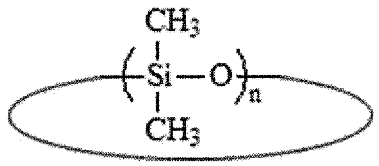

(3)

wherein n is an integer of 2 or greater; wherein
the total amount of the silicon-containing compound of the general formula (2-1) or (2-2) in which m is an integer of 3 or greater and the silicon-containing compound of the general formula (3) in which n is an integer of 3 or greater is more than 0 ppm and 47,000 ppm or less based on the total weight of the silicon-containing compounds of the general formulas (1), (2-1), (2-2), and (3), and
the composition is used for producing a polyimide precursor obtained by copolymerizing the silicon-containing compound, tetracarboxylic dianhydride, and diamine.

**12.** The composition according to claim 11, wherein the total amount of the silicon-containing compound of the general formula (2-1) or (2-2) in which m is an integer of 3 or greater and the silicon-containing compound of the general formula (3) in which n is an integer of 3 or greater is more than 0 ppm and 11,000 ppm or less based on the total weight of the silicon-containing compounds of the general formulas (1), (2-1), (2-2), and (3).

**13.** The composition according to claim 11 or 12, wherein m is an integer of 3 to 5 in the silicon-containing compound represented by the general formula (2-1) or (2-2).

**14.** The composition according to any one of claims 11 to 13, wherein n is an integer of 3 to 8 in the silicon-containing compound represented by the general formula (3).

**15.** The composition according to any one of claims 1 to 14, wherein $L_1$ and $L_2$ of the silicon-containing compound represented by the general formula (1) are each independently an amino group or an anhydride group.

**16.** The composition according to claim 15, wherein $L_1$ and $L_2$ of the silicon-containing compound represented by the general formula (1) are an amino group.

**17.** The composition according to any one of claims 1 to 16, wherein the tetracarboxylic dianhydride is at least one selected from the group consisting of pyromellitic dianhydride, 3,3',4,4'-biphenyltetracarboxylic dianhydride, 4,4'-oxydiphthalic anhydride, cyclohexanetetracarboxylic dianhydride, and cyclobutanetetracarboxylic dianhydride.

**18.** The composition according to any one of claims 1 to 17, wherein the diamine is at least one selected from the group consisting of 4,4'(3,3')-diaminodiphenyl sulfone, m-tolidine, p-phenylenediamine, 2,2'-bis(trifluoromethyl)benzidine, and 2,2'-bis[4-(4-aminophenoxy)phenyl]propane.

**19.** The composition according to any one of claims 1 to 18, wherein a polyimide resin film obtained by curing the polyimide precursor is used for a flexible substrate.

**20.** The composition according to any one of claims 1 to 19, wherein a polyimide resin film obtained by curing the polyimide precursor is used for a flexible display.

**21.** The silicon-containing compound composition according to any one of claims 1 to 20, wherein the silicon-containing compound represented by the general formula (2-1) or (2-2) is a silicon-containing compound represented by the general formula (2-1).

**22.** A method for purifying a silicon-containing compound used for producing a polyimide precursor obtained by copolymerizing a silicon-containing compound, tetracarboxylic dianhydride, and diamine, the method comprising the steps of:
providing a composition comprising:

a silicon-containing compound represented by the following general formula (1):

[Chemical Formula 13]

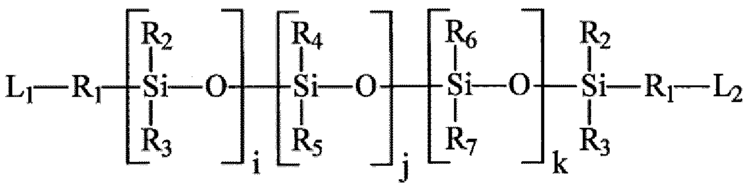

(1)

wherein a plurality of $R_1$ are each independently a single bond or a divalent organic group having 1 to 10 carbon atoms, $R_2$ and $R_3$ are each independently a monovalent organic group having 1 to 10 carbon atoms, at least one of which is a monovalent aliphatic hydrocarbon group having 1 to 5 carbon atoms, $R_4$ and $R_5$ are each independently a monovalent organic group having 1 to 10 carbon atoms, at least one of which is a monovalent aromatic group having 6 to 10 carbon atoms, $R_6$ and $R_7$ are each independently a monovalent organic group having 1 to 10 carbon atoms, at least one of which is an organic group having an unsaturated aliphatic hydrocarbon group, $L_1$ and $L_2$ are each independently an amino group, an anhydride group, an isocyanate group, a carboxyl group, an acid ester group, an acid halide group, a hydroxy group, an epoxy group, or a mercapto group, i and j are each independently an integer of 1 to 200, k is an integer of 0 to 200, and $0.05 \leq j/(i + j + k) \leq 0.50$, at least one silicon-containing compound of the following general formula (2-1) or (2-2) in which m is an integer of 3 or greater:

[Chemical Formula 14]

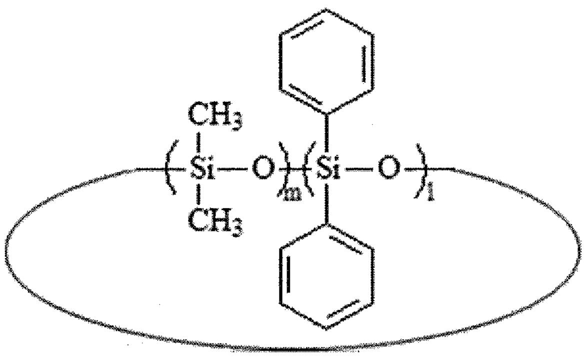

(2-1)

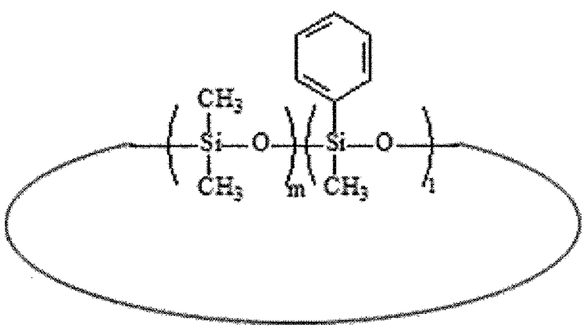

(2-2)

wherein m is an integer of 1 or greater, and
optionally, a silicon-containing compound represented by the following general formula (3):

[Chemical Formula 15]

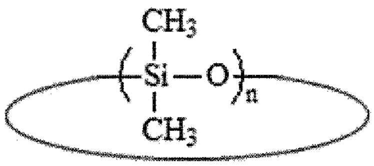

(3)

wherein n is an integer of 2 or greater; and

reducing the total amount of the silicon-containing compound of the general formula (2-1) or (2-2) in which m is an integer of 3 or greater to more than 0 ppm and 46,000 ppm or less based on the total weight of the silicon-containing compounds of the general formulas (1), (2-1), (2-2), and (3).

**23.** The method for purifying a silicon-containing compound according to claim 22, wherein the silicon-containing compound represented by the general formula (2-1) or (2-2) is a silicon-containing compound represented by the general formula (2-1).

**24.** A method for purifying a silicon-containing compound used for producing a polyimide precursor obtained by copolymerizing a silicon-containing compound, tetracarboxylic dianhydride, and diamine, the method comprising the steps of:

providing a composition comprising:

a silicon-containing compound represented by the following general formula (1):

[Chemical Formula 16]

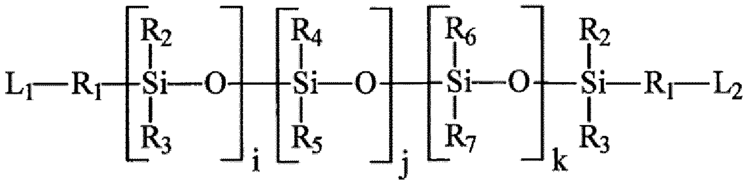

(1)

wherein a plurality of $R_1$ are each independently a single bond or a divalent organic group having 1 to 10 carbon atoms, $R_2$ and $R_3$ are each independently a monovalent organic group having 1 to 10 carbon atoms, at least one of which is a monovalent aliphatic hydrocarbon group having 1 to 5 carbon atoms, $R_4$ and $R_5$ are each independently a monovalent organic group having 1 to 10 carbon atoms, at least one of which is a monovalent aromatic group having 6 to 10 carbon atoms, $R_6$ and $R_7$ are each independently a monovalent organic group having 1 to 10 carbon atoms, at least one of which is an organic group having an unsaturated aliphatic hydrocarbon group, $L_1$ and $L_2$ are each independently an amino group, an anhydride group, an isocyanate group, a carboxyl group, an acid ester group, an acid halide group, a hydroxy group, an epoxy group, or a mercapto group, i and j are each independently an integer of 1 to 200, k is an integer of 0 to 200, and $0.05 \leq j/(i + j + k) \leq 0.50$,

at least one silicon-containing compound of the following general formula (2-1) or (2-2) in which m is an integer of 3 or greater:

[Chemical Formula 17]

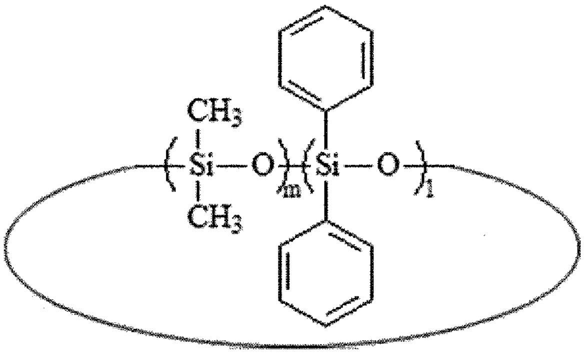

(2-1)

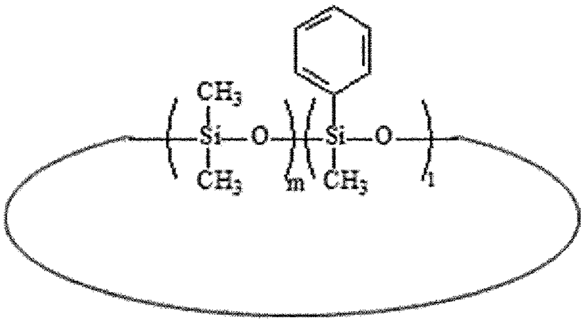

(2-2)

wherein m is an integer of 1 or greater, and
optionally, a silicon-containing compound represented by the following general formula (3):

[Chemical Formula 18]

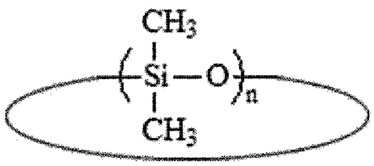

(3)

wherein n is an integer of 2 or greater; and
reducing the total amount of the silicon-containing compound of the general formula (2-1) or (2-2) in which m is an integer of 3 or greater based on the total weight of the silicon-containing compounds of the general formulas (1), (2-1), (2-2), and (3); wherein
the reducing step includes treating the composition at 200 to 300°C under 300 Pa or less for 2 to 12 hours.

FIG. 1

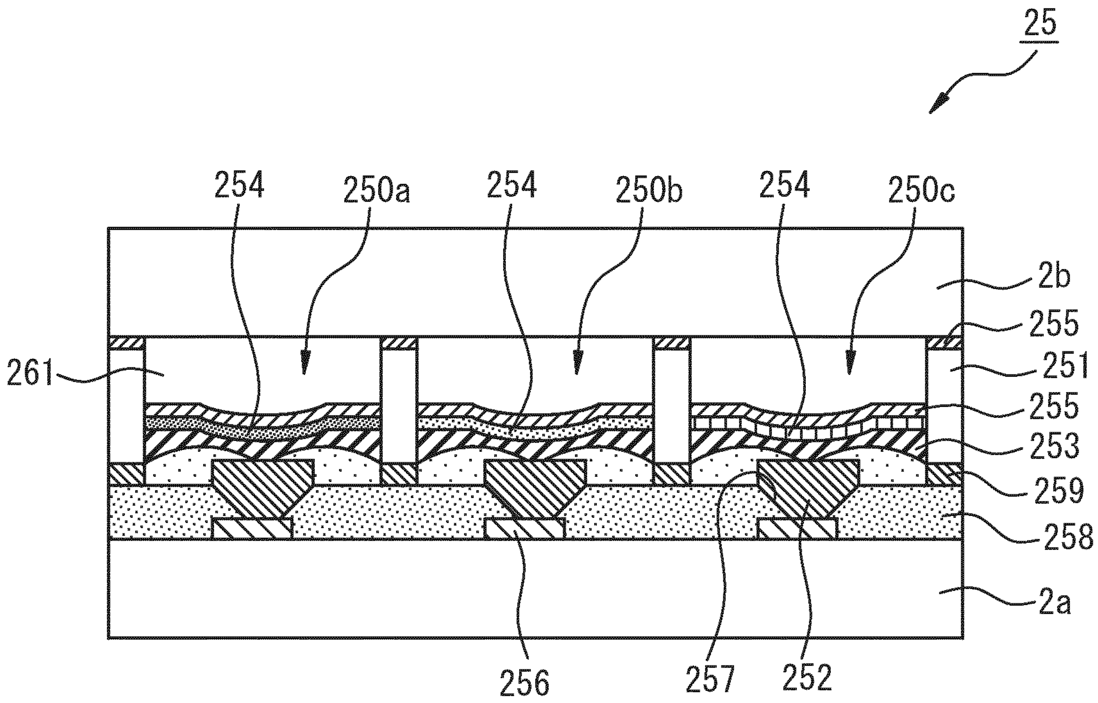
25
254
250a
254
250b
254
250c
2b
255
261
251
255
253
259
258
2a
256
257
252

## INTERNATIONAL SEARCH REPORT

International application No.
PCT/JP2019/017294

A. CLASSIFICATION OF SUBJECT MATTER
Int.Cl. C08G73/10(2006.01)i, C08G77/34(2006.01)i

According to International Patent Classification (IPC) or to both national classification and IPC

B. FIELDS SEARCHED

Minimum documentation searched (classification system followed by classification symbols)
Int.Cl. C08G73/10, C08G77/34

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2010-031225 A (SONY CHEMICAL & INFORMATION DEVICE CORP.) 12 February 2010 claims 1, 3, 10, 13, paragraphs [0002]-[0003], [0007], [0020], [0025]-[0026], [0030], [0036], [0040], [0042] (Family: none) | 1-24 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 June 2019 (28.06.2019) | 09 July 2019 (09.07.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2019/017294

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2010-083951 A (SONY CHEMICAL & INFORMATION DEVICE CORP.) 15 April 2010 claims 1, 4-7, paragraphs [0003]-[0007], [0015], [0019] & CN 102165370 A | 1-18, 21-24<br>19-20 |
| Y | JP 2006-028533 A (SHIN-ETSU CHEMICAL CO., LTD.) 02 February 2006 claim 1, paragraphs [0001]-[0005], [0033] (Family: none) | 1-18, 21-24 |
| A | WO 2013/047451 A1 (JSR CORPORATION) 04 April 2013 paragraph [0198] & CN 103842409 A & KR 10-2014-0069264 A | 1-24 |
| A | JP 2002-146024 A (SHIN-ETSU CHEMICAL CO., LTD.) 22 May 2002 claims 1, 4 (Family: none) | 1-24 |
| A | JP 08-183859 A (SHIN-ETSU CHEMICAL CO., LTD.) 16 July 1996 paragraph [0006] (Family: none) | 1-24 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014148441 A
- WO 2014098235 A
- JP 2016029126 A
- JP 2006028533 A
- JP 2002012666 A
- JP 2007512568 W
- JP 2012511173 W
- JP 2010067957 A
- JP 2013179306 A
- WO 2005068535 A

### Non-patent literature cited in the description

- Regarding Silicone Grease and Oil Compounds. Q&A. Website of Shin-Etsu Chemical Co., Ltd, 13 March 2018